(19) Europäisches Patentamt
European Patent Office
Office européen des brevets

(11) **EP 3 094 530 B1**

(12) **EUROPÄISCHE PATENTSCHRIFT**

(45) Veröffentlichungstag und Bekanntmachung des Hinweises auf die Patenterteilung:
**31.05.2023   Patentblatt 2023/22**

(21) Anmeldenummer: **14824434.6**

(22) Anmeldetag: **17.12.2014**

(51) Internationale Patentklassifikation (IPC):
**B60W 30/095** (2012.01)

(52) Gemeinsame Patentklassifikation (CPC):
**B60W 30/12;** B60W 2554/4041; G01S 17/88

(86) Internationale Anmeldenummer:
**PCT/EP2014/078188**

(87) Internationale Veröffentlichungsnummer:
**WO 2015/106913 (23.07.2015 Gazette 2015/29)**

(54) **VERFAHREN UND SYSTEM ZUM SCHÄTZEN EINES FAHRSPURVERLAUFS**

METHOD AND SYSTEM FOR ESTIMATING A  COURSE OF A TRAFFIC LANE

PROCÉDÉ ET SYSTÈME POUR ÉVALUER LE TRACÉ D'UNE VOIE DE CIRCULATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.01.2014   DE 102014200638**

(43) Veröffentlichungstag der Anmeldung:
**23.11.2016   Patentblatt 2016/47**

(73) Patentinhaber: **Bayerische Motoren Werke Aktiengesellschaft**
**80809 München (DE)**

(72) Erfinder: **SCHWARZ, Loren**
**81539 München (DE)**

(56) Entgegenhaltungen:
WO-A1-2005/039957      DE-A1-102005 029 662
DE-A1-102005 039 103      DE-A1-102006 037 993
DE-A1-102007 021 762      DE-A1-102010 020 984

**Beschreibung**

Die vorliegende Erfindung betrifft ein Verfahren und ein System zum Schätzen eines Fahrspurverlaufs.

Moderne Fahrzeuge sind zunehmend mit Fahrerassistenzsystemen ausgestattet, die den Fahrer des Kraftfahrzeugs bei der Führung des Kraftfahrzeugs unterstützen, vor drohenden Gefahren warnen, und/oder im Fall einer Kollisionsgefahr automatisch Maßnahmen ergreifen, um die Kollisionsgefahr abzuwenden, oder den Fahrer bei der Einhaltung der gewählten Fahrspur unterstützen, wie beispielsweise Spurhalteassistenten, die beim Verlassen einer Fahrspur eine Warnung ausgeben, auch als LDW, Lane Departure Warning, bezeichnet, oder aktiv in die Steuerung des Fahrzeugs eingreifen, um das Fahrzeug in der Fahrspur zu halten, auch als LKA, Lane Keeping Assist, bezeichnet.

Für diese Zwecke ist es oftmals notwendig, den Verlauf einer Fahrspur zu erkennen, auf der sich das eigene Fahrzeug (auch als Ego-Fahrzeug bezeichnet) bewegt. Hierzu werden oftmals Kameras, gegebenenfalls in Kombination mit einem LIDAR System, eingesetzt, welche auf der Fahrbahn vorhandene Fahrspurmarkierungen erfassen. Aus den aufgenommenen Bildern der Fahrspurrandmarkierungen werden die Grenzen der Fahrspur und damit die Fahrspur selbst ermittelt. Dies ist beispielsweise beschrieben in den Dokumenten EP 1 074 430 A1 und WO 05/088344.

Bei diesen Verfahren besteht das Problem, dass der Verlauf der Fahrspur bedingt durch die Grenzen der Erfassung und Auflösung des verwendeten Kamera- oder LIDAR Systems selbst unter optimalen Bedingungen nur bis zu einer begrenzten Entfernung vor dem Fahrzeug erkannt werden kann.

Darüber hinaus hängt die Güte und Zuverlässigkeit der Fahrspurerkennung wesentlich von der Sichtbarkeit der Fahrspurmarkierungen ab. Es kann daher bei Witterungsbedingungen mit schlechter Sicht, wie beispielsweise im Nebel oder bei regennasser oder schneebedeckter Fahrbahn, dazu kommen, dass die Fahrspurmarkierungen nicht oder nur schwer sichtbar sind und daher eine Fahrspurerkennung basierend auf der Erfassung von Fahrspurmarkierungen nicht zuverlässig möglich ist. Dieselbe Problematik stellt sich auch, wenn auf einem Fahrbahnabschnitt keine Fahrstreifenmarkierungen existieren, etwa im Fall einer frisch geteerten Verkehrswegdecke, auf der noch keine Markierungsarbeiten vorgenommen wurden, oder auf einem Fahrbahnabschnitt, auf dem auf Grund lange andauernder Beanspruchung die Fahrstreifenmarkierung stark verblasst ist und nur schwer erfasst werden kann. Ebenso kann es vorkommen, dass bei einer hohen Verkehrsdichte, insbesondere in einer Stausituation, Fahrspurmarkierungen vielfach von Fahrzeugen verdeckt werden, so dass auch in diesem Fall eine Fahrspurerkennung nur eingeschränkt möglich ist.

Ein weiteres Problem stellt sich, wenn Fahrspurmarkierungen zwar vorhanden und gut sichtbar sind, jedoch ungültige Fahrspurmarkierungen darstellen, wie beispielsweise im Fall einer Baustelle mit geänderter Verkehrsführung, oder weil Hindernisse wie liegengebliebene Fahrzeuge, verlorene Ladung oder anderen Ereignisse auf der Fahrbahn erfordern, vom vorgesehenen und markierten Fahrspurverlauf abzuweichen.

Aus dem Dokument DE 10 2004 028 404 ist ein Verfahren zur Schätzung des Verlaufs einer Fahrspur eines Kraftfahrzeugs bekannt, wobei der Verlauf der Fahrspur durch Erkennung der Trajektorie eines in der Fahrspur vorausfahrenden Fahrzeugs erkannt wird. Um den tatsächlichen Verlauf der Trajektorie zu erhalten, wird der erkannte Trajektorienverlauf mit zwei Filtern bewertet, um Bewegungen des Fahrzeugs in lateraler Richtung in der Fahrspur zu filtern und Spurwechsel zu erkennen.

Bei diesem Vorgehen wird der ermittelte Fahrspurverlauf allein durch das erkannte, in der Fahrspur vorausfahrende Fahrzeug bestimmt. Jede Bewegung des vorausfahrenden Fahrzeugs, die von dem tatsächlichen Verlauf der Fahrspur abweicht, wie beispielsweise im Fall eines Spurwechsels, kann daher zu einer verfälschten Fahrspurbestimmung führen. Weiter besteht das Problem, dass nach diesem Vorgehen eine Fahrspurbestimmung nur erfolgen kann, wenn ein in der Fahrspur vorausfahrendes Fahrzeug existiert.

Aus dem Dokument WO 2005/039957 ist weiter bekannt, zur Fahrspurschätzung die Trajektorien vorausfahrender oder entgegenkommender Fahrzeuge zu erfassen. Es werden dabei von einem Bildsensor, der im am Fahrzeug angebracht ist, Bilder der Szene vor dem Fahrzeug aufgenommen. In einer Auswerteeinheit werden anhand aufeinander folgender Bilder die Trajektorien vorausfahrender und/oder entgegenkommender Fahrzeuge aufgezeichnet und zur Fahrspurschätzung verwendet. Dies erfolgt durch Objekterkennung und Objektverfolgung in den einzelnen Bildern, wobei aus den Veränderungen des Objekts die Parameter abgeleitet werden.

Hierbei besteht das Problem, dass das Aufzeichnen und Berücksichtigen von Trajektorien von Fahrzeugen, die einen Spurwechsel ausführen oder von der Fahrbahn abbiegen, die Fahrspurschätzung verschlechtern können. In dem Dokument WO 2005/039957 wird daher vorgesehen, die Güte der Spurschätzung zu verringern, wenn ein Abbiege- oder Spurwechselvorgang des vorherfahrenden Fahrzeuges erkannt wird.

Aus dem Dokument EP 1 829 760 ist ein Fahrerassistenzsystem mit einem Kursprädiktionsmodul bekannt, das den voraussichtlichen Kurs des eigenen Fahrzeugs berechnet. Die Kursprädiktion beruht auf fahrdynamischen Größen des eigenen Fahrzeugs, beispielsweise der gemessenen Gierrate oder der Giergeschwindigkeit, wobei weiter die Kollektivbewegung der georteten vorausfahrenden Fahrzeuge relativ zum eigenen Fahrzeug berücksichtigt werden kann. Die Kollektivbewegung wird durch ein gewichtetes Mittel der Querbewegungen aller georteten vorausfahrenden Fahrzeuge

3 EP 3 094 530 B1 4

repräsentiert. Das Gewicht, mit dem die Kollektivbewegung in die Kursprädiktion eingeht, wird dabei in Abhängigkeit von Kriterien variiert, die das Verkehrsumfeld betreffen, wie der Anzahl vorausfahrender Fahrzeuge, dem Fahrbahntyp, einem Kurvigkeitsmaß für die Fahrbahn, oder ob der Fahrtrichtungsanzeiger des Fahrzeugs gesetzt ist.

In dem Dokument DE 10 2005 002 504 wird eine Fahrschlauchprädiktion beschrieben, wobei Informationen über den Verlauf von Mittelstreifen und Randmarkierungslinien auf der Fahrbahn, der Verlauf von Fahrbahnrändern, sowie Fahrzeugtrajektorien erfasst und miteinander fusioniert werden, um basierend auf dem Fusionsergebnis verschiedene Fahrschlauchhypothesen zu bilden.

Aus dem Dokument US 2002/049539 ist weiter ein System zur Erfassung von Objekten auf einem vorbestimmten Weg eines Fahrzeugs bekannt, das sich auf einer Autobahnfahrspur bewegt. Dazu werden über einen vorwärtsblickenden Radarsensor Entfernungsdaten, Winkeldaten und Geschwindigkeitsdaten für Objekte im Sichtfeld vor dem Fahrzeug erfasst. Basierend auf den so erfassten Daten werden Pfadschätzungen für die Objekte erstellt, um zu bestimmen, ob sich die Objekte in der Autobahnspur des Fahrzeugs befinden oder nicht. Die Information über erkannte Objekte in der Autobahnspur des Fahrzeugs wird zu Zwecken der Kollisionsvermeidung oder zum Deaktivieren von Tempomatsystemen verwendet.

Dokument DE 10 2007 021 762 A1 betrifft eine Straßenumgebungs-Erkennungsvorrichtung, in der eine Koordinatenposition des Fahrzeugs und eine Koordinatenposition eines Objekts bestimmt wird. Basierend auf diesen Koordinatenpositionen und einem Attribut des Objekts wird die Straßenumgebung des Fahrzeugs bestimmt.

Dokument DE 10 2005 029 662 A1 betrifft ein Verfahren und eine Anordnung zur Erfassung der Umgebung eines Landfahrzeuges, wobei Satellitensignale jeweils von einer Mehrzahl der Landfahrzeuge empfangen werden. Zumindest in einem Teil der Mehrzahl der Landfahrzeuge werden aus den Satellitensignalen Rohdaten erzeugt, die Entfernungen, Pseudoentfernungen und/oder Relativgeschwindigkeiten des Landfahrzeuges relativ zu den Satelliten entsprechen, wobei zumindest die Rohdaten eines ersten der Landfahrzeuge zu einem zweiten der Landfahrzeuge übertragen werden, wobei zumindest aus den Rohdaten des ersten Landfahrzeuges und aus den Rohdaten des zweiten Landfahrzeuges Umgebungsinformationen über die Umgebung der Landfahrzeuges ermittelt werden und wobei bei der Erzeugung der Umgebungsinformationen aus den Rohdaten Trajektorien der Bewegung einer Mehrzahl von Fahrzeugen gebildet werden.

Weiterer Stand der Technik ist in den Dokumenten DE 10 2005 039 103 A1 und DE 10 2006 037 993 A1 offenbart.

Es ist daher eine Aufgabe der vorliegenden Erfindung, ein Verfahren und ein System zum Erkennen eines Fahrspurverlaufs anzugeben, welches die vorstehenden Nachteile überwindet und eine zuverlässige Ermittlung eines Fahrspurverlaufs erlaubt.

Diese und andere Aufgaben der Erfindung werden gelöst durch ein Verfahren und ein System zum Schätzen eines Fahrspurverlaufs für ein Fahrzeug, als ein Ego-Fahrzeug, das sich auf einer Fahrbahn mit mehreren Fahrspuren bewegt, wie mit den Ansprüchen 1 und 11 definiert. Weitere bevorzugte Ausführungsformen sind in den abhängigen Ansprüchen dargelegt.

Als eine Lösung wird ein Verfahren zum Schätzen eines Fahrspurverlaufs für ein Fahrzeug, als ein Ego-Fahrzeug, angegeben, das sich auf einer Fahrbahn mit mehreren Fahrspuren bewegt, wobei wiederholt die Schritte ausgeführt werden: Erkennen von einem oder mehreren anderen Fahrzeugen, die sich in der selben Richtung bewegen wie das Ego-Fahrzeug; Erfassen von Fahrzeugpositionen für jedes der erkannten anderen Fahrzeuge; Bilden einer Trajektorie für jedes der erkannten anderen Fahrzeuge; Zuordnen der Trajektorien zu möglichen Fahrspuren basierend auf einem (jeweiligen) Verlauf der Trajektorien in der Umgebung des Ego-Fahrzeugs; Auswählen einer der möglichen Fahrspuren, der zumindest eine Trajektorie zugeordnet ist; und Schätzen des Fahrspurverlaufs basierend auf der zumindest einen Trajektorie, die der ausgewählten Fahrspur zugeordnet ist.

Der Verlauf einer Fahrspur wird daher geschätzt basierend auf den Bewegungen von anderen Fahrzeugen, die sich im Umfeld des Ego-Fahrzeugs bewegen. Es ist daher möglich, den Verlauf einer Fahrspur auch dann zu schätzen beziehungsweise zu bestimmen, wenn keine Fahrspurmarkierungen vorhanden sind, oder vorhandene Fahrspurmarkierungen nur schlecht zu erkennen und zu erfassen sind. Mit diesem Vorgehen ist es ebenfalls möglich, einen für eine aktuell gegebene Verkehrssituation angemessenen Fahrspurverlauf zu schätzen, beispielsweise in Situationen, in denen etwa wegen eines Hindernisses die auf der Fahrbandecke aufgebrachten Fahrspurmarkierungen kollektiv missachtet werden, um dem Hindernis auszuweichen.

Zudem ist die Schätzung der Fahrspur nicht auf die Erfassung und Auswertung der Bewegung eines einzelnen, insbesondere vorausfahrenden Fahrzeugs beschränkt. Es können vielmehr die Bewegungen vieler Fahrzeuge, die sich im Umfeld des Ego-Fahrzeugs bewegen, ausgewertet werden, was eine verlässlichere Grundlage zum Schätzen eines Fahrspurverlaufs hoher Genauigkeit bietet.

Indem für die Bewertung der Fahrzeugbewegungen zur Schätzung des Fahrspurverlaufs die Trajektorien der erkannten anderen Fahrzeuge zunächst jeweiligen möglichen Fahrspuren zugeordnet werden, aus den möglichen Fahrspuren eine ausgewählt wird und dann die Schätzung des Fahrspurverlaufs erfolgt basierend auf den Trajektoriendaten derjenigen erkannten anderen Fahrzeuge, die der ausgewählten Fahrspur zuge-

3

ordnet sind, kann vermieden werden, dass in Situationen, in denen unterschiedliche Fahrspuren unterschiedlich verlaufen und sich voneinander weg bewegen, die Berücksichtigung und kollektive Betrachtung von mehreren Fahrzeugen auf den unterschiedlichen, in unterschiedliche Richtungen weiterführenden Fahrspuren zu einer den tatsächlichen Verlauf verfälschenden Mittelung und dadurch fehlerhaften Schätzung des Fahrspurverlaufs kommt. Es kann so auch die Schätzung des Fahrspurverlaufs gebildet werden als Mittelung ähnlicher Trajektorien, wobei Ausreißer gegebenenfalls ausgefiltert werden können, um einen geglätteten Fahrspurverlauf zu erhalten.

Ferner ist gemäß der Erfindung vorgesehen, dass, wenn erkannt wird, dass eine Trajektorie eines anderen Fahrzeugs, das einer Fahrspur zugeordnet ist, in ihrem Verlauf zumindest eine Trajektorie eines weiteren anderen Fahrzeugs kreuzt, die einer anderen Fahrspur zugeordnet ist, die Trajektorie als ein Spurwechsel markiert wird. Die Markierung kann beispielsweise dazu dienen, die betreffende Trajektorie gänzlich oder bis zum Zeitpunkt des erkannten Spurwechsels zu löschen, oder um anzuzeigen, dass die betreffende Trajektorie bei der Schätzung des Fahrspurverlaufs nicht berücksichtigt werden soll.

Auf diese Weise kann verhindert werden, dass die Beobachtung von spurwechselnden anderen Fahrzeugen die Schätzung des Fahrspurverlaufs negativ beeinträchtigen und verfälschen.

Vorzugsweise kann zum Zuordnen der Trajektorien zu möglichen Fahrspuren basierend auf dem Verlauf der Trajektorien in der Umgebung des Ego-Fahrzeugs ein Fangbereich definiert sein für die mögliche Fahrspur des Ego-Fahrzeugs, wobei eine Trajektorie der möglichen Fahrspur des Ego-Fahrzeugs zugeordnet wird, wenn die Trajektorie zumindest einen Trajektorienpunkt aufweist, der in dem Fangbereich für die mögliche Fahrspur des Ego-Fahrzeugs liegt. Weiter bevorzugt kann ferner ein Fangbereich definiert sein für eine mögliche Fahrspur rechts des Ego-Fahrzeugs und/oder ein Fangbereich definiert sein für eine mögliche Fahrspur links des Ego-Fahrzeugs, wobei eine Trajektorie der möglichen Fahrspur links beziehungsweise rechts des Ego-Fahrzeugs zugeordnet wird, wenn die Trajektorie zumindest einen Trajektorienpunkt aufweist, der in dem Fangbereich für die mögliche Fahrspur links beziehungsweise rechts des Ego-Fahrzeugs liegt.

Mittels der relativ zum Ego-Fahrzeug definierten Fangbereiche können die Trajektorien, die für die verschiedenen erkannten anderen Fahrzeuge aufgezeichnet wurden, auf einfache und zuverlässige Weise den verschiedenen möglichen Fahrspuren zugeordnet werden.

Vorzugsweise wird beim Auswählen einer Fahrspur, der zumindest eine Trajektorie zugeordnet ist, überprüft, ob der Fahrspur des Ego-Fahrzeugs zumindest eine Trajektorie zugeordnet ist. Falls dies der Fall ist, wird die Fahrspur des Ego-Fahrzeugs ausgewählt. Weiter bevorzugt kann, wenn der Fahrspur des Ego-Fahrzeugs keine Trajektorie zugeordnet ist, ferner überprüft werden, ob einer Fahrspur links oder rechts des Ego-Fahrzeugs zumindest eine Trajektorie zugeordnet ist, und falls dies der Fall ist, kann die betreffende Fahrspur ausgewählt werden.

Die Schätzung des Fahrspurverlaufs kann auf diese Weise priorisiert auf Basis der Trajektorien von solchen anderen Fahrzeugen erfolgen, die sich auf der selben Fahrspur bewegen wie das Ego-Fahrzeug selbst. Es kann daher eine hohe Zuverlässigkeit dafür erwartet werden, dass der auf dieser Basis geschätzte Fahrspurverlauf für die Fahrspur des Ego-Fahrzeugs dem tatsächlichen Fahrspurverlauf entspricht. Falls keine anderen Fahrzeuge erkannt wurden, die sich auf der selben Fahrspur bewegen wie das Ego-Fahrzeug selbst, kann dazu übergegangen werden, den Fahrspurverlauf für die Fahrspur des Ego-Fahrzeugs zu schätzen basierend auf Basis von solchen anderen Fahrzeugen, die sich auf einer benachbarten Fahrspur bewegen. Auf diese Weise kann auch in diesem Fall der Fahrspurverlauf für die Fahrspur des Ego-Fahrzeugs geschätzt werden.

Vorzugsweise wird zum Schätzen des Fahrspurverlaufs eine Ausgleichsrechnung ausgeführt, um Parameter eines Polynoms zweiten Grades oder höher, oder einer Klothoide zu bestimmen, das beziehungsweise die durch die Menge der Trajektorienpunkte der zumindest einen Trajektorie gelegt wird, wobei die Ausgleichsrechnung vorzugsweise auf der Methode der kleinsten Quadrate basiert.

Weiter bevorzugt wird ein Gütemaß berechnet und ausgegeben, wobei das zumindest eine Gütemaß aufweist: die Anzahl an betrachteten anderen Fahrzeugen auf der ausgewählten Fahrspur oder auf jeder der Fahrspuren; die Vorausschau für die ausgewählte Fahrspur oder für jede der möglichen Fahrspuren; und/oder den sich bei Ausführen der Ausgleichsrechnung ergebenden Residuumfehler.

Das Gütemaß kann auf diese Weise ein Maß für die Genauigkeit und/oder Zuverlässigkeit der Schätzung des Fahrspurverlaufs darstellen. Diese Information kann beispielsweise zusammen mit der Information über den geschätzten Fahrspurverlauf an Fahrerassistenzfunktionseinheiten bereitgestellt werden, um eine Beurteilung über die Güte und Zuverlässigkeit der Schätzung zu erlauben, so dass die Fahrerassistenzfunktionseinheiten die Ausführung der Fahrerassistenzfunktionen entsprechend anpassen können.

Es kann weiter auch ein Schritt vorgesehen sein, die Trajektorien der erfassten anderen Fahrzeuge zu plausibilisieren und/oder zu filtern.

Beispielsweise können die Trajektorien dahingehend überprüft werden, ob die zugehörigen Trajektorienpunkte eine Bewegung mit plötzlichen großen Änderungen in der Beschleunigung oder der Geschwindigkeit in Quer- oder Längsrichtung beschreiben, die unvereinbar sind mit der Annahme, dass es sich um ein sich auf der Fahrbahn befindendes Fahrzeug handelt. Ebenso können die Trajektorien dahingehend überprüft werden, ob diese Trajektorienpunkte enthalten, die außerhalb des Bereichs der Fahrbahn liegen. Falls dies der Fall ist, können die betreffenden Trajektorien als nicht plausibel bewertet und gefiltert werden, so dass die betreffenden Trajektorien nicht zur Schätzung des Fahrspurverlaufs berücksichtigt werden und eine Verfälschung der Schätzung vermieden wird.

Das Verfahren zur Schätzung eines Fahrspurverlaufs kann Teil eines Fahrerassistenzverfahrens zum Unterstützen eines Fahrers beim Führen eines Fahrzeuges sein. Das Fahrerassistenzverfahren zum Unterstützen eines Fahrers beim Führen eines Fahrzeuges, als ein Ego-Fahrzeug, kann beispielsweise die Schritte aufweisen: Schätzen eines Verlaufs der Fahrspur des Ego-Fahrzeugs; Erkennen des Verlaufs der Fahrspur des Ego-Fahrzeugs mittels eines kamerabasierten und/oder LIDAR basierten Fahrspurerkennungssystems; und Ausführen zumindest einer Fahrerassistenzfunktion basierend auf dem geschätzten Fahrspurverlauf und dem erkannten Fahrspurverlauf, wobei die Information über den erkannten Fahrspurverlauf plausibilisiert wird mittels der Information über den geschätzten Fahrspurverlauf, wobei, wenn die Information über den erkannten Fahrspurverlauf als nicht plausibel bewertet wird, die Fahrerassistenzfunktion ausgeführt wird basierend allein auf Basis der Information über den geschätzten Fahrspurverlauf, und/oder die Information über den geschätzten Fahrspurverlauf plausibilisiert wird mittels der Information über den erkannten Fahrspurverlauf, wobei, wenn die Information über den geschätzten Fahrspurverlauf als nicht plausibel bewertet wird, die Fahrerassistenzfunktion ausgeführt wird basierend allein auf Basis der Information über den erkannten Fahrspurverlauf.

Das Fahrerassistenzverfahren kann auf diese Weise basierend auf zwei unterschiedlichen Ansätzen zur Bestimmung des Fahrspurverlaufs für die Fahrspur des Ego-Fahrzeugs ausgeführt werden. Es ist daher möglich, dass die Ergebnisse einer kamerabasierte Fahrspurerkennung plausibilisiert und verifiziert werden mit Hilfe einer Schätzung des Fahrspurverlaufs basierend auf der Erfassung der Bewegung von anderen Fahrzeugen, die sich auf der Fahrbahn bewegen. Alternativ oder ergänzend können auch die Ergebnisse der Schätzung des Fahrspurverlaufs plausibilisiert und verifiziert werden mit Hilfe der kamerabasierten Fahrspurerkennung.

Bevorzugt kann ein Fusionieren der Information über den geschätzten Fahrspurverlauf und der Information über den erkannten Fahrspurverlauf erfolgen, um Information eines fusionierten Fahrspurverlaufs zu erhalten, wobei die Fahrerassistenzfunktion basierend auf der Information über den fusionierten Fahrspurverlauf ausgeführt wird.

Als eine weitere Lösung wird ein System angegeben zum Schätzen eines Fahrspurverlaufs für ein Fahrzeug, als ein Ego-Fahrzeug, bei einer Bewegung auf einer Fahrbahn mit mehreren Fahrspuren, aufweisend: Objekterkennungsmittel, die eingerichtet sind, ein oder mehrere andere Fahrzeuge zu erkennen, die sich auf der Fahrbahn in der selben Richtung bewegen wie das Ego-Fahrzeug; Fahrzeugpositionserfassungsmittel, die eingerichtet sind, Fahrzeugpositionen für jedes der erkannten anderen Fahrzeuge zu erfassen; Trajektorienbildungsmittel, die eingerichtet sind, für jedes der erkannten anderen Fahrzeuge eine Trajektorie zu bilden; Trajektorienzuordnungsmittel, die eingerichtet sind, die gebildeten Trajektorien möglichen Fahrspuren zuzuordnen basierend auf einem Verlauf der Trajektorien in der Umgebung des Ego-Fahrzeugs; Auswahlmittel, die eingerichtet sind, aus der Mehrzahl möglicher Fahrpuren eine Fahrspur auszuwählen, der zumindest eine Trajektorie zugeordnet ist; und Fahrspurverlaufsschätzmittel, die eingerichtet sind, den Fahrspurverlauf zu schätzen basierend auf der zumindest einen Trajektorie, die der ausgewählten Fahrspur zugeordnet ist. Ferner ist gemäß der Erfindung das System dazu eingerichtet, dass, wenn erkannt wird, dass eine Trajektorie eines anderen Fahrzeugs, das einer Fahrspur zugeordnet ist, in ihrem Verlauf zumindest eine Trajektorie eines weiteren anderen Fahrzeugs kreuzt, die einer anderen Fahrspur zugeordnet ist, die Trajektorie als ein Spurwechsel markiert wird.

Bevorzugt kann weiter vorgesehen sein, dass zum Zuordnen der Trajektorien zu möglichen Fahrspuren basierend auf dem Verlauf der Trajektorien in der Umgebung des Ego-Fahrzeugs ein Fangbereich definiert ist für die mögliche Fahrspur des Ego-Fahrzeugs, und bevorzugt weiter ein Fangbereich definiert ist für eine mögliche Fahrspur rechts des Ego-Fahrzeugs und/oder ein Fangbereich definiert ist für eine mögliche Fahrspur links des Ego-Fahrzeugs; wobei die Trajektorienzuordnungsmittel eingerichtet sind, eine Trajektorie der möglichen Fahrspur des Ego-Fahrzeugs zuzuordnen, wenn die Trajektorie zumindest einen Trajektorienpunkt aufweist, der in dem Fangbereich für die mögliche Fahrspur des Ego-Fahrzeugs liegt, und bevorzugt weiter eingerichtet sind, eine Trajektorie der möglichen Fahrspur links beziehungsweise rechts des Ego-Fahrzeugs zuzuordnen, wenn die Trajektorie zumindest einen Trajektorienpunkt aufweist, der in dem Fangbereich für die mögliche Fahrspur links beziehungsweise rechts des Ego-Fahrzeugs liegt; und wobei die Trajektorienzuordnungsmittel eingerichtet sind, zum Auswählen einer Fahrspur, der zumindest eine Trajektorie zugeordnet ist, zu überprüfen, ob der Fahrspur des Ego-Fahrzeugs zumindest eine Trajektorie zugeordnet ist, und wenn ja, die Fahrspur des Ego-Fahrzeugs auszuwählen, und bevorzugt weiter eingerichtet sind, wenn der Fahrspur des Ego-Fahrzeugs keine Trajektorie zugeordnet ist, zu überprüfen, ob einer Fahrspur links oder rechts des Ego-Fahrzeugs zumindest eine Trajektorie zugeordnet ist, und wenn ja, die betreffende Fahrspur auszuwählen.

Das System zum Schätzen eines Fahrspurverlaufs ist bevorzugt eingerichtet, das genannte Verfahren zum Schätzen eines Fahrspurverlaufs auszuführen.

Das System zum Schätzen eines Fahrspurverlaufs kann in einem Fahrzeug aufgewiesen sein. Bevorzugt weist das Fahrzeug weiter zumindest eine Fahrerassistenzfunktionseinheit auf, welche eine Fahrerassistenzfunktion ausführt auf Basis des geschätzten Fahrspurverlaufs.

Die Erfindung wird im Nachfolgenden am Beispiel bevorzugter Ausführungsformen beschrieben, mit Bezug auf die Zeichnungen:

Fig. 1 zeigt schematisch ein Fahrzeug, das mit einem System zum Schätzen eines Fahrspurverlaufs ausgestattet ist, gemäß einer Ausführungsform;

Fig. 2 zeigt ein Diagramm eines Verfahrens zum Schätzen eines Fahrspurverlaufs gemäß einer Ausführungsform;

Fig. 3A bis 3C zeigen schematisch die Erfassung von Trajektorieninformation für ein vorausfahrendes anderes Fahrzeug;

Fig. 4A bis 4C zeigen schematisch die Zuordnung von Trajektorien zu Fahrspuren; und

Fig. 5 zeigt schematisch die Schätzung eines Fahrspurverlaufs für die Fahrspur, auf der sich das Fahrzeug bewegt, basierend auf Trajektorien, die einer benachbarten Fahrspur zugeordnet sind.

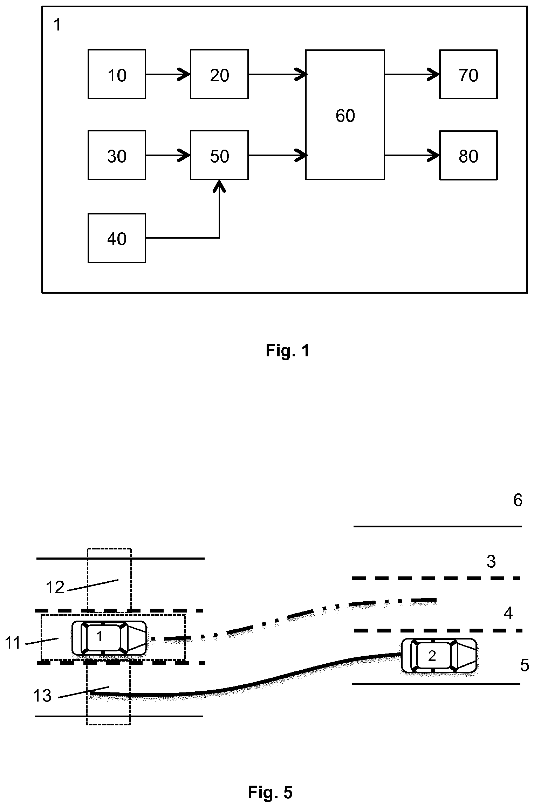

Die Figur 1 zeigt schematisch ein Fahrzeug 1 gemäß einer Ausführungsform. Das Fahrzeug 1 wird auch als eigenes Fahrzeug beziehungsweise als Ego-Fahrzeug 1 bezeichnet.

Wie in der Figur 1 dargestellt, kann das Ego-Fahrzeug 1 ein Kamerasystem 10 aufweisen, das eingerichtet ist, einen Bereich vor dem Ego-Fahrzeug 1 zu erfassen. Das Kamerasystem 10 ist mit einer zugehörigen Bildverarbeitungseinheit versehen und ist eingerichtet, um Fahrbahnmarkierungen und Fahrbahnbegrenzungen zu erkennen. Die von der Kamera 10 erfassten Daten können an ein System 20 zur kamerabasierten Fahrspurverlaufserkennung ausgegeben werden, welches das Vorhandensein und die Positionen der erkannten Fahrspurmarkierungen und Fahrbahnbegrenzungen auswertet, um daraus einen Verlauf von Fahrspuren einer Fahrbahn zu bestimmen, auf dem sich das Ego-Fahrzeug 1 bewegt.

Das Ego-Fahrzeug 1 kann auch mit verschiedenen Fahrerassistenzfunktionseinheiten 70, 80 ausgestattet sein, wie beispielsweise mit einer Längs- und/oder Querregelungseinheit 70 und/oder einer Einheit 80 zum Warnen beim Verlassen einer Fahrspur (Lane Departure Warning), welche entsprechende Fahrerassistenzfunktionen auf Basis des Fahrspurverlaufs ausführen. So kann auf Basis des Fahrspurverlaufs beispielsweise ein Lenkmoment bestimmt werden, das geeignet ist, das Ego-Fahrzeug 1 auf seiner Fahrspur zu halten, und die Lenkung des Ego-Fahrzeugs 1 kann mit einem solchen Lenkmoment beaufschlagt werden.

Das in der Figur 1 dargestellte Ego-Fahrzeug 1 kann weiter ein Radarsensorsystem 30 aufweisen, das eingerichtet ist, den Bereich vor dem Ego-Fahrzeug 1 zu erfassen und Objekte, insbesondere andere, vorausfahrende Fahrzeuge zu erkennen und deren Abstand, Winkel und vorzugsweise auch deren Relativgeschwindigkeiten relativ zum Ego-Fahrzeug 1 zu messen. Dies ist jedoch nicht beschränkend, und das Radarsensorsystem 30 kann auch eingerichtet sein, andere Fahrzeuge in anderen Bereichen des Umfelds des Ego-Fahrzeugs 1, insbesondere seitlich und/oder hinter dem Ego-Fahrzeug 1, zu erkennen. Das Radarsensorsystem 30 ist weiter eingerichtet, erkannte Objekte zu verfolgen, mit einer eindeutigen Identifikation zu versehen und entsprechende Informationen bevorzugt in Form von Objektlisten auszugeben.

Die Figur 1 zeigt weiter eine Odometrieeinheit 40, welche Bewegungsdaten für das Ego-Fahrzeug 1 bereitstellt, wie etwa die Geschwindigkeit, Beschleunigung und Gierwinkel des Ego-Fahrzeugs 1.

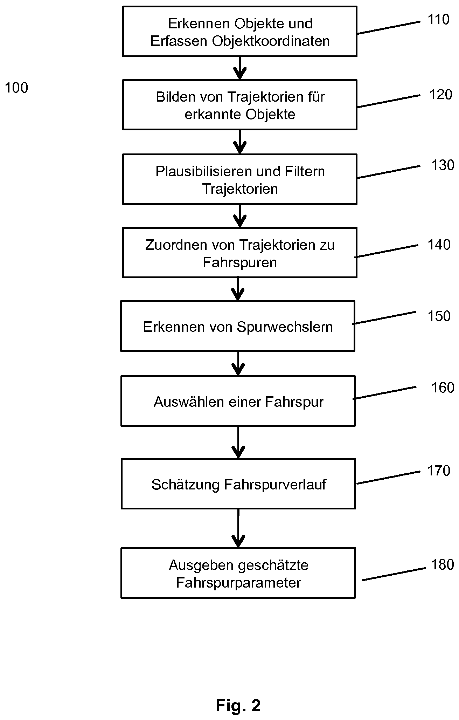

Die von dem Radarsensorsystem 1 und der Odometrieeinheit 40 ausgegebenen Informationen werden einem System 50 zum Schätzen des Fahrspurverlaufs für das Ego-Fahrzeug 1 bereitgestellt, das den Fahrspurverlauf schätzt und ausgibt, wie im größeren Detail weiter unten mit Bezug auf die Figuren 2 bis 5 beschrieben werden wird.

Wie die Figur 1 weiter zeigt, kann ferner eine Einheit 60 vorgesehen sein, welche den vom System 20 zur kamerabasierten Fahrspurverlaufserkennung ausgegebenen erkannten Fahrspurverlauf und den von dem System 50 zum Schätzen des Fahrspurverlaufs ausgegebenen geschätzten Fahrspurverlauf empfängt, bewertet und einen zur Verwendung durch die Fahrerassistenzfunktionseinheiten 70, 80 bestimmten Fahrspurverlauf ausgibt.

Die Einheit 60 kann dabei beispielsweise nach Art einer Umschalteinheit arbeiten, derart, dass wenn das System 20 zur kamerabasierten Fahrspurverlaufserkennung einen Fahrspurverlauf erkannt hat und ausgibt, dieser erkannte Fahrspurverlauf ausgewählt wird und als zur Verwendung durch die Fahrerassistenzfunktionseinheiten 70, 80 bestimmter Fahrspurverlauf ausgegeben wird, und andernfalls der von dem System 50 zum Schätzen des Fahrspurverlaufs geschätzten und ausgegebene Fahrspurverlauf ausgewählt wird und als zur Verwendung durch die Fahrerassistenzfunktionseinheiten 70, 80 bestimmter Fahrspurverlauf ausgegeben wird.

Bevorzugt kann die Einheit 60 den von dem System 50 zum Schätzen des Fahrspurverlaufs geschätzten und ausgegebenen Fahrspurverlauf auch dazu verwenden, um die von dem System 20 zur kamerabasierten Fahrspurverlaufserkennung erkannten und ausgegebenen Fahrspurverlauf auf Plausibilität zu überprüfen, wobei die Einheit 60 den vom System 20 zur kamerabasierten Fahrspurverlaufserkennung erkannten und ausgegebenen Fahrspurverlauf nur dann auswählt und als zur Verwendung durch die Fahrerassistenzfunktionseinheiten 70, 80 bestimmten Fahrspurverlauf ausgibt, wenn dessen Plausibilität bejaht wird. Falls das System 20 zur kamerabasierten Fahrspurverlaufserkennung nicht in der Lage ist, einen Fahrspurverlauf zu erkennen, oder wenn ein von dem System 20 zur kamerabasierten Fahrspurverlaufserkennung erkannte und ausgegebene Fahrspurverlauf als nicht plausibel bewertet wird, kann die Einheit 60 eingerichtet sein, den von dem System 50 zum Schätzen des Fahrspurverlaufs geschätzten Fahrspurverlauf als zur Verwendung durch die Fahrerassistenzfunktionseinheiten 70, 80 zu bestimmen und auszugeben.

Es kann auch vorgesehen sein, dass die Einheit 60 einen Fahrspurverlauf als zur Verwendung durch die Fahrerassistenzfunktionseinheiten 70, 80 bestimmt basierend sowohl auf dem vom System 20 zur kamerabasierten Fahrspurverlaufserkennung erkannten Fahrspurverlauf als auch auf dem von dem System 50 zum Schätzen des Fahrspurverlaufs geschätzten Fahrspurverlauf. Insbesondere kann dabei beispielsweise vorgesehen sein, dass der vom System 20 zur kamerabasierten Fahrspurverlaufserkennung erkannte Fahrspurverlauf ergänzt und verlängert wird basierend auf dem von dem System 50 zum Schätzen des Fahrspurverlaufs geschätzte Fahrspurverlauf, oder dass der vom System 20 zur kamerabasierten Fahrspurverlaufserkennung erkannte Fahrspurverlauf und der von dem System 50 zum Schätzen des Fahrspurverlaufs geschätzte Fahrspurverlauf fusioniert werden zu einem gemeinsamen, fusionierten Fahrspurverlauf.

Auf diese Weise kann den Fahrerassistenzfunktionseinheiten 70, 80 eine zuverlässigere Information über den Fahrspurverlauf bereitgestellt werden und so die Zuverlässigkeit und Güte der Ausführung der entsprechenden Fahrerassistenzfunktionen verbessert werden.

Mit Bezug auf die Figuren 2 bis 5 wird nun beispielhaft ein Verfahren 100 zum Schätzen eines Fahrspurverlaufs beschrieben, das von dem System 50 zum Schätzen eines Fahrspurverlaufs ausgeführt wird.

In einem Schritt 110 werden mittels des Radarsystems 30 Fahrzeuge im Umfeld des Ego-Fahrzeugs 1 erkannt und zu Zwecken der Objektverfolgung jeweils mit einer eindeutigen Identifikation ID versehen.

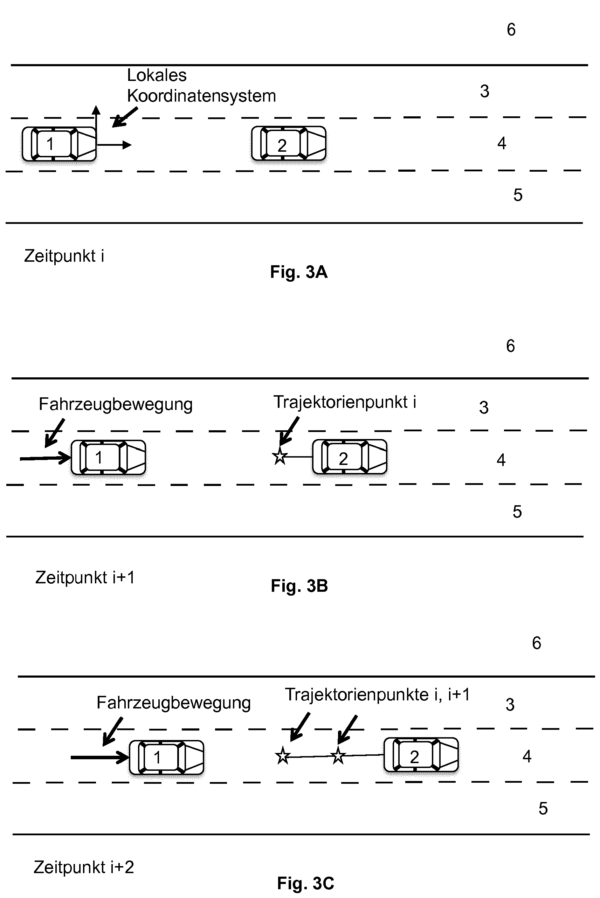

Dies ist beispielhaft in den Figuren 3A bis 3C dargestellt, welche schematisch das Ego-Fahrzeug 1 und ein anderes Fahrzeug 2 zu verschiedenen Zeitpunkten i, i+1 und i+2 zeigen, die sich auf einer Fahrbahn 6 bewegen. Zu jedem Zeitpunkt i, i+1 und i+2 erfasst das Ego-Fahrzeug 1 mit Hilfe des Radarsystems 30 die Position des anderen Fahrzeugs 2, vorzugsweise in einem lokalen, sich mit dem Ego-Fahrzeug 1 mitbewegenden Koordinatensystem, bezeichnet durch den Index L(i), als eine Fahrzeugposition $p_{ID,i}^{L(i)}$ des anderen Fahrzeugs 2 mit der Identifikation ID für den Zeitpunkt i. Die so für jede Identifikation ID erfassten Fahrzeugpositionen $p_{ID,i}^{L(i)}$ werden innerhalb der Dauer eines Zeitfensters, beispielsweise mit einer Dauer von 10s, bei jedem Zeitschritt weiter propagiert und umgerechnet in Fahrzeugpositionen $p_{ID,i}^{L(j)}$ in dem lokalen Koordinatensystem des Ego-Fahrzeugs 1 zum jeweils aktuellen Zeitpunkt j, bezeichnet mit dem Index L(j).

Diese Propagation der Fahrzeugpositionen kann beispielsweise erfolgen, indem die jeweiligen Fahrzeugpositionen $p_{ID,i}^{L(i)}$ zunächst in Fahrzeugpositionen $p_{ID,i}^{G}$ in einem globalen, ortsfesten Koordinatensystem G umgerechnet werden:

$$p_i^G = T_i\, p_{ID,i}^{L(i)}$$

wobei $T_i$ eine Transformationsmatrix darstellt, welche das lokale Koordinatensystem des Ego-Fahrzeugs 1 zum Zeitpunkt i in das globale Koordinatensystem überführt:

$$T_i = \begin{pmatrix} R(\varphi_i) & t_i \\ 0 & 1 \end{pmatrix}$$

wobei der Vektor $t_i$ die Position in globalen Koordinaten des Ego-Fahrzeugs 1 zum Zeitpunkt i, $\varphi_i$ das Heading beziehungsweise den Richtungswinkel des Ego-Fahrzeugs 1 zum Zeitpunkt i, und $R(\varphi_i)$ die entsprechende, durch das Heading $\varphi_i$ vorgegebene Rotationsmatrix darstellen:

$$R(\varphi_i) = \begin{pmatrix} cos(\varphi_i) & sin(\varphi_i) \\ -sin(\varphi_i) & cos(\varphi_i) \end{pmatrix}$$

Unter Verwendung einer Transformationsmatrix $T_j$, welche das lokale Koordinatensystem des Ego-Fahrzeugs 1 zum aktuellen Zeitpunkt j in das globale Koordinatensystem überführt, können auf entsprechende Weise die Fahrzeugpositionen $p_{ID,i}^{G}$ im globalen Koordinatensystem G umgerechnet werden in Fahrzeugpositionen $p_{ID,i}^{L(j)}$ in den Koordinaten des lokalen Koordinatensystems L(j) des Ego-Fahrzeugs 1 für den aktuellen Zeitpunkt j:

$$p_{ID,i}^{L(j)} = T_j^{-1} p_{ID,i}^{G}$$

Auf diese Weise kann eine Trajektorie als Beschreibung des zeitlichen Verlaufs der Bewegung des beobachteten anderen Fahrzeugs 2 in dem lokalen, sich mit dem Ego-Fahrzeug 1 mitbewegenden Koordinatensystem erhalten werden.

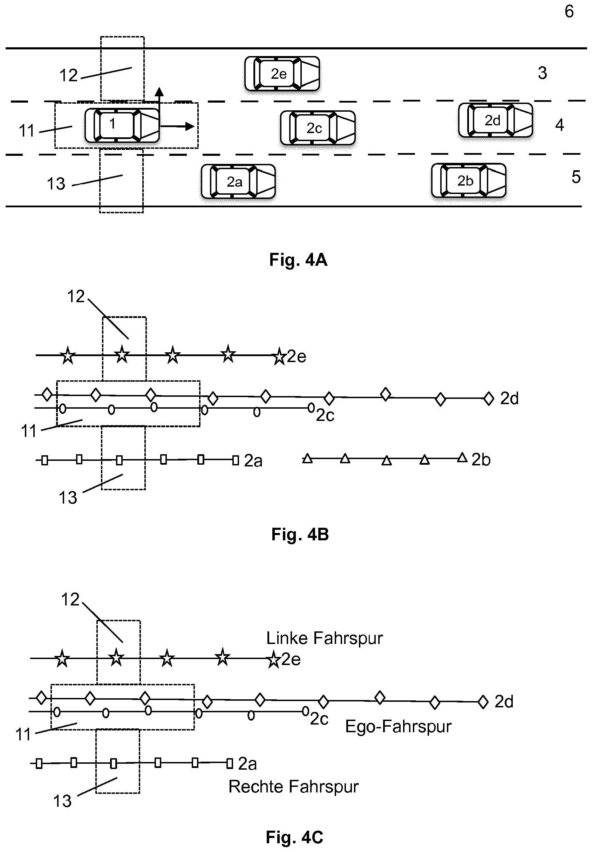

Die Erfassung mehrerer Trajektorien für eine Mehrzahl von anderen Fahrzeugen 2a bis 2e, deren Filterung und Zuordnung zu einzelnen Fahrspuren 3, 4, 5 wird nun mit Bezug auf die Figuren 4A bis 4C beschrieben.

In der Figur 4A ist eine Situation dargestellt, in der sich das Ego-Fahrzeug 1 und eine Vielzahl von anderen Fahrzeugen 2a bis 2e auf einer dreispurigen Fahrbahn 6 bewegen. Wie in der Figur 4A weiter dargestellt, ist um die aktuelle Position des Ego-Fahrzeugs 1 ein als "Fangbereich" bezeichneter Bereich 11 definiert als ein Fangbereich für die Fahrspur 4 des Ego-Fahrzeugs 1. Weiter sind zu beiden Seiten des Ego-Fahrzeugs 1 jeweils ein weiterer Fangbereich 12, 13 für die Fahrspur 3, 5 zur linken beziehungsweise zur rechten der Fahrspur 4 des Ego-Fahrzeugs 1 definiert. Beispielsweise kann für die Fahrspur 4 des Ego-Fahrzeugs 1 der Fangbereich 11 einen Bereich definieren, der das Ego-Fahrzeug umgibt und etwa die erwartete Breite einer Fahrspur aufweist. Vorzugsweise kann der Fangbereich für die Ego-Fahrspur 4 einen Bereich definieren, der sich in longitudinaler Richtung bis 10 Meter vor dem Ego-Fahrzeug beziehungsweise bis 10 Meter Entfernung erstreckt in longitudinaler Richtung vom Ursprung eines lokalen Koordinatensystems des Ego-Fahrzeugs, sowie in lateraler Richtung bis 2 Meter Entfernung vom Ursprung des lokalen Koordinatensystems. Für die linke und/oder rechte Fahrspur 3, 5 kann jeweils ein Fangbereich 12, 13 definiert sein, der sich in longitudinaler Richtung bis 2 Meter vor dem Ego-Fahrzeug 1 beziehungsweise bis 2 Meter Entfernung erstreckt in longitudinaler Richtung vom Ursprung des lokalen Koordinatensystems des Ego-Fahrzeugs 1, sowie in lateraler Richtung zur linken beziehungsweise zur rechten Seite des Ego-Fahrzeugs 1 sich bis in 5 Meter Entfernung vom Ursprung des lokalen Koordinatensystems erstreckt. Bevorzugt ist vorgesehen, dass der Fangbereich 11 für die Fahrspur 4 des Ego-Fahrzeugs 1 und der rechte beziehungsweise linke Fangbereich 12, 13 für die benachbarten Fahrspuren 3, 5 nahtlos aneinander grenzen. Darüber hinaus kann es auch möglich sein, den Bereich links beziehungsweise rechts des Ego-Fahrzeugs 1 jeweils mit mehreren Fangbereichen 12, 13 zu überwachen, so dass auch die Bewegung von sich auf weiter entfernten Fahrspuren bewegender anderer Fahrzeuge erfasst und den weiter entfernten Fahrspuren zugeordnet werden kann.

Für jedes der anderen Fahrzeuge 2a bis 2e werden, wie vorstehend mit Bezug auf die Figuren 3A bis 3C beschrieben, für jeden Zeitpunkt i eine jeweilige Fahrzeugposition $p_{ID,i}^{L(i)}$ bestimmt, und die innerhalb des Zeitfensters ermittelten Fahrzeugposition $p_{ID,i}^{L(i)}$ werden

jeweils propagiert und umgerechnet in Fahrzeugpositionen $p_{ID,i}^{L(j)}$ in dem Koordinatensystem des Ego-Fahrzeugs 1 zum aktuellen Zeitpunkt j. Als Ergebnis werden, wie in der Figur 4B dargestellt, Trajektorien für die anderen Fahrzeuge 2a bis 2e erhalten.

In einem weiteren Schritt 130 können die erhaltenen Trajektorien für die anderen Fahrzeuge 2a bis 2e plausibilisiert und gefiltert werden. Es findet dabei eine Bewertung statt, ob es sich bei den einzelnen anderen Fahrzeugen 2a bis 2e, deren Bewegungen durch die erfassten Trajektorien abgebildet werden, tatsächlich um am Verkehr teilnehmende andere Fahrzeuge handelt, die sich auf der Fahrbahn 6 in derselben Richtung bewegen wie das Ego-Fahrzeug 1. Falls dies nicht der Fall ist, beispielsweise weil es sich um eine Trajektorie eines in Gegenrichtung verkehrenden Fahrzeugs handelt, oder weil es sich um eine Trajektorie handelt, die plötzliche und abrupte große Änderungen in der Längs- und/oder Quergeschwindigkeit aufweist, die keiner möglichen Fahrzeugbewegung eines Fahrzeugs entsprechen können, oder weil es sich um eine Trajektorie handelt, die auf Rauschen zurückzuführen ist, so wird die betreffende Trajektorie ausgefiltert. Es kann so verhindert werden, dass die nachfolgende Schätzung des Fahrspurverlaufs durch fehlerhaft erfasste andere Fahrzeuge verfälscht wird.

Die plausibilisierten und gefilterten Trajektorien werden nun den Fahrspuren 3, 4, 5 zugeordnet basierend darauf, ob die Trajektorien durch einen der Fangbereiche 11, 12 und 13 verlaufen, und wenn ja, durch welchen. Im Beispiel der Figur 4B verlaufen beispielsweise die Trajektorien der anderen Fahrzeuge 2c und 2d durch den Fangbereich 11 für die Fahrspur 4 des Ego-Fahrzeugs 1. Entsprechend werden die Trajektorien der anderen Fahrzeuge 2c und 2d der Ego-Fahrspur 4 zugeordnet. Die Trajektorie des anderen Fahrzeugs 2e verläuft durch den Fangbereich 12 für die linke Fahrspur 3 und dementsprechend wird die Trajektorie des anderen Fahrzeugs 2e der linken Fahrspur 3 zugeordnet. Die Trajektorie des anderen Fahrzeugs 2a verläuft durch den Fangbereich 13 für die rechte Fahrspur 5 und dementsprechend wird die Trajektorie des anderen Fahrzeugs 2a der rechten Fahrspur 5 zugeordnet. Die Trajektorie des anderen Fahrzeugs 2b erstreckt sich nur in einem Bereich in einer Entfernung vor dem Ego-Fahrzeug 1, ohne durch einen der Fangbereiche 11, 12, 13 zu verlaufen. Dementsprechend wird die Trajektorie des anderen Fahrzeugs 2b keiner Fahrspur zugeordnet und folglich nicht weiter berücksichtigt. Die sich auf diese Weise ergebende Zuordnung der Trajektorien für die anderen Fahrzeuge 2a, 2c bis 2e ist ebenfalls in der Figur 4C veranschaulicht.

Wie beschrieben, erfolgt in diesem Fall die Zuordnung einer Trajektorie zu einer Fahrspur 3, 4, 5 basierend darauf, ob die Trajektorie durch einen entsprechenden Fangbereich 11, 12, 13 für die entsprechende Fahrspur 3, 4, 5 verläuft. Dies ist jedoch nicht beschränkend, und es kann weiter auch vorgesehen sein, eine Trajektorie einer Fahrspur 3, 4, 5 zuzuordnen, wenn für zumindest eine vorgegebene Streckenlänge sich die Trajektorie mit einer anderen Trajektorie deckt, die bereits einer Fahrspur 3, 4, 5 zugeordnet ist. Auf diese Weise können die bereits auf Basis der Fangbereiche 11, 12, 13 zugeordneten Trajektorien quasi "verlängert" werden, um eine größere Vorausschau zu erlauben.

Nachdem die Zuordnung der Trajektorien zu einer jeweiligen der Fahrspuren 3, 4, 5 erfolgt ist, können in einem weiteren Schritt 150 Spurwechsel erkannt werden. Hierzu können beispielsweise alle Trajektorien markiert und/oder entfernt werden, die einer Fahrspur 3, 4, 5 zugeordnet sind, jedoch in ihrem Verlauf mindestens eine andere Trajektorie kreuzen, die einer anderen Fahrspur 3, 4, 5 zugeordnet ist. Vorteilhafter Weise können zur Erkennung von Spurwechseln zusätzlich auch die Ergebnisse weiterer, an sich bereits aus dem Stand der Technik bekannter Verfahren zur Erkennung eines Fahrspurwechsels des Vorderfahrzeugs miteinbezogen werden. Hierzu gehören etwa Verfahren zur bildverarbeitungsgestützten Erkennung von Lichtsignalen zur Fahrtrichtungsanzeige.

Um für die Fahrspur 4 des Ego-Fahrzeugs 1 eine Schätzung des Fahrspurverlaufs zu bestimmen, wird in einem Schritt 160 zunächst unter den mehreren Fahrspuren 3, 4, 5 zumindest eine Fahrspur 3, 4, 5 ausgewählt, der zumindest eine Trajektorie zugeordnet ist. Hierbei kann so vorgegangen werden, dass zunächst überprüft wird, ob der Fahrspur 4 des Ego-Fahrzeugs 1 zumindest eine Trajektorie zugeordnet ist. Wenn dies der Fall ist, wird die Fahrspur 4 des Ego-Fahrzeugs 1 ausgewählt. Wenn dies nicht der Fall ist, wird weiter überprüft, ob einer Fahrspur 3, 5 links oder rechts des Ego-Fahrzeugs 1 zumindest eine Trajektorie zugeordnet ist, und falls dies der Fall ist, wird die betreffende Fahrspur 3, 5 beziehungsweise zumindest eine der betreffenden Fahrspuren 3, 5 ausgewählt. Auf diese Weise kann zumindest eine Fahrspur 3, 4, 5 ausgewählt werden, um als Basis dafür zu dienen, den Verlauf der Fahrspur 4 für das Ego-Fahrzeug 1 zu schätzen.

Für die ausgewählte Fahrspur 3, 4, 5 wird nun eine Schätzung des Fahrspurverlaufs bestimmt, indem eine Ausgleichsrechnung ausgeführt wird, um beispielsweise nach der Methode der kleinsten Quadrate Parameter einer Kurve zu bestimmen, welche möglichst optimal durch die Menge der Trajektorienpunkte der Trajektorien verläuft, die der betreffenden Fahrspur 3, 4, 5 zugeordnet sind. Als Kurve kann beispielswese ein Polynom zweiten oder höheren Grades, insbesondere eine Parabel, oder eine Klothoide verwendet werden. Die so ermittelte Kurve stellt eine Schätzung für den Fahrspurverlauf der ausgewählten Fahrspur 3, 4, 5 dar. Wenn es sich bei der ausgewählten Fahrspur 3, 4, 5 um die Fahrspur 4 des Ego-Fahrzeugs 1 handelt, so stellt die erhaltene Schätzung eine Schätzung für den Verlauf der Fahrspur 4 des Ego-Fahrzeugs 1 dar.

Für den Fall, dass die Fahrspur 4 des Ego-Fahrzeugs 1 keine ausgewählte Fahrspur ist, etwa weil keine Trajektorie eines anderen Fahrzeugs 2 erfasst wurde, die durch den Fangbereich 11 für das Ego-Fahrzeug 1 verläuft, oder weil eine durch den Fangbereich 11 für das Ego-Fahrzeug 1 verlaufende Trajektorie eines anderen Fahrzeugs 2 als ein Spurwechsler markiert ist und aus diesem Grund nicht berücksichtigt wird, so kann eine Schätzung für den Verlauf der Fahrspur 4 des Ego-Fahrzeugs 1 bestimmt werden basierend auf der Schätzung für den Verlauf einer hierzu benachbarten Fahrspur 3, 5 als der ausgewählten, benachbarten Fahrspur 3, 5.

Es kann dabei beispielsweise die als Schätzung für den Verlauf der ausgewählten, benachbarten Fahrspur 3, 5 erhaltene Kurve um einen Verschiebungsbetrag in lateraler Richtung verschoben werden, um die Kurve in den Bereich der Fahrspur 4 für das Ego-Fahrzeug 1, bevorzugt in den Ursprung des lokalen Koordinatensystems zu verschieben. Die so verschobene Kurve kann dann als Schätzung für den Verlauf der Fahrspur 4 des Ego-Fahrzeugs 1 verwendet werden. Insbesondere für Abschnitte der Fahrbahn 6, die im Wesentlichen geradlinig oder nur mit einer relativ geringen Krümmung verlaufen kann auf diese Weise eine relativ gute Schätzung für den Verlauf der Fahrspur 4 für das Ego-Fahrzeug 1 erhalten werden.

Um eine Schätzung höherer Güte, insbesondere für Abschnitte der Fahrbahn 6 mit größerer Krümmung zu erhalten, kann es bevorzugt sein, basierend auf der Kurve, die als Schätzung für den Verlauf der benachbarten Fahrspur 3, 5 erhalten wurde, als eine erste Kurve, eine hierzu parallel verlaufende, um einen Verschiebungsbetrag beabstandete zweite Kurve zu bestimmen, welche durch den Bereich der Fahrspur 4 für das Ego-Fahrzeug 1 verläuft. Hierzu kann zunächst wie vorstehend beschrieben der laterale Verschiebungsbetrag bestimmt werden, um die erste Kurve in den Ursprung des lokalen Koordinatensystems des Ego-Fahrzeug 1 zu verschieben. Weiter wird eine hinreichende Anzahl von Stützstellen entlang der ersten Kurve bestimmt, die von der ersten Kurve ebenfalls um den lateralen Verschiebungsbetrag beabstandet sind. Schließlich werden, beispielsweise ebenfalls mit einer Ausgleichsrechnung, die Parameter der zweiten Kurve so bestimmt, dass die zweite Kurve möglichst optimal durch die Stützstellen verläuft. Die so erhaltene zweite Kurve stellt nun eine Schätzung für den Verlauf der Fahrspur 4 für das Ego-Fahrzeug 1 dar.

Dies ist beispielhaft ebenso in der Figur 5 dargestellt. Die Figur 5 zeigt eine Fahrbahn 6 mit gekrümmtem Fahrbahnverlauf, wobei in einem Bereich der Fahrbahn 6 keine Fahrbahnmarkierungen vorhanden sind. In diesem Bereich könnte daher das Kamerasystem 10 und das System 20 zur kamerabasierten Fahrspurverlaufserkennung keine Fahrspur 3, 4, 5 erkennen und entsprechend keinen Fahrspurverlauf bestimmen und ausgeben.

Im Beispiel der Figur 5 ist weiter ein anderes Fahrzeug 2 dargestellt, das sich auf der rechten Fahrspur 5 bewegt. Das Radarsensorsystem 30 erfasst wie vorstehend beschrieben die Trajektorie des anderen Fahrzeugs 2 und ordnet diese auf Grund des Verlaufs durch den rechten Fangbereich 13 der Fahrspur 5 rechts des Ego-Fahrzeugs 1 zu. Basierend auf der so zugeordneten Trajektorie wird nun eine Schätzung des Fahrspurverlaufs für die rechte Fahrspur 5 erstellt, wobei diese Schätzung in der Figur 5 als durchgezogene Linie veranschaulicht ist. Ausgehend von der Schätzung des Fahrspurverlaufs für die rechte Fahrspur 5, als der ersten Kurve, wird wie vorstehend beschrieben, eine zweite Kurve bestimmt und so eine Schätzung des Fahrspurverlaufs für die Fahrspur 4 des Ego-Fahrzeugs 1 erhalten, in der Figur 5 als gestrichpunktete Linie veranschaulicht.

Wie vorstehend beschrieben, wird der Verschiebungsbetrag bevorzugt so gewählt, dass die Kurve, die als Schätzung für den Verlauf der benachbarten Fahrspur 3, 5 erhalten wurde, nach der Verschiebung im Wesentlichen durch den Ursprung des lokalen Koordinatensystems des Ego-Fahrzeugs 1 verläuft. Alternativ kann der Verschiebungsbetrag auch so gewählt werden, um im Wesentlichen der Breite einer Fahrspur 3, 4, 5 der Fahrbahn 6 zu entsprechen. Die Bestimmung der Breite einer Fahrspur 3, 4, 5 der Fahrbahn 6 wiederum kann auf verschiedene Weisen bestimmt werden, beispielsweise als ein von der Art der Fahrbahn 6 abhängiger, vorgegebener Standardwert, oder basierend auf Information, die in einem Navigationssystem für den Verkehrsweg 6 hinterlegt ist, oder basierend auf einer aktuellen oder in der Vergangenheit erfolgten Bestimmung der Fahrspurbreite basierend auf der kamerabasierten Fahrspurerkennung.

Es kann auf diese Weise eine Schätzung für den Verlauf der Fahrspur 4 des Ego-Fahrzeugs 1 erhalten werden, die bevorzugt als eine Kurve, insbesondere einer Parabel oder einer Klothoide vorliegen kann. Im Fall einer Parabel als Modell bei der Ausgleichsrechnung können als Parameter für den geschätzten Verlauf der Fahrspur 4 bevorzugt die Ablage, die Krümmung und das Heading ausgegeben werden.

Während, wie vorstehend beschrieben, es in vielen Fällen ausreichend sein mag, allein einen Verlauf der Fahrspur 4 des Ego-Fahrzeugs 1 zu schätzen und auszugeben, ist dies nicht beschränkend. Es ist ebenso denkbar, dass für mehrere Fahrspuren 3, 4, 5 oder für alle Fahrspuren 3, 4 und 5 der Fahrbahn 6 eine jeweilige Schätzung des Fahrspurverlaufs erstellt und ausgegeben wird. In diesem Fall werden entsprechend unter den betreffenden mehreren Fahrspuren 3, 4, 5 beziehungsweise unter allen Fahrspuren 3, 4 und 5, für die jeweilige Schätzungen des Fahrspurverlaufs erstellt werden sollen, im Schritt des Auswählens 160 alle Fahrspuren 3, 4, 5 ausgewählt, für die jeweils zumindest eine Trajektorie zugeordnet ist, um basierend auf den zugeordneten Trajektorien entsprechende Schätzungen des jeweiligen Fahrspurverlaufs zu erstellen. Weiter können für solche Fahrspuren 3, 4 oder 5, denen keine Trajektorie zugeordnet ist, die Schätzung des jeweiligen Verlaufs der betreffenden Fahrspuren 3, 4, 5, wie vorstehend beschrieben, abgeleitet und geschätzt werden basierend auf dem Verlauf zumindest einer benachbarten Fahrspur 3, 4 oder 5. Auf diese Weise kann jeweils eine Schätzung des Fahrspurverlaufs bestimmt werden für eine Mehrzahl oder für alle der Fahrspuren 3, 4 und 5.

Wie vorstehend beschrieben, kann dabei für jede der Fahrspuren 3, 4, 5, für die ein Fahrspurverlauf geschätzt wird, jeweils der Verlauf der Fahrspur 3, 4, 5, bevorzugt als Parameter einer Kurve ausgegeben werden.

Während im Vorstehenden die Bestimmung und die Ausgabe einer Schätzung für den Verlauf zumindest einer Fahrspur 3, 4, 5 beschrieben wurde, ist die vorliegende Erfindung nicht auf die Bestimmung und Ausgabe dieser Information beschränkt, und es können weiter auch verschiedene Gütemaße bestimmt und ausgegeben werden, welche eine Bewertung der Güte der Schätzung des jeweiligen Fahrspurverlaufs erlauben. Die Gütemaße können insbesondere nützlich sein für mögliche Fahrerassistenzfunktionen oder andere Funktionen, welche auf Basis der Schätzung des Fahrspurverlaufs arbeiten, um eine Bewertung der Plausibilität, Zuverlässigkeit, Reichweite der Schätzung oder ähnliches vorzunehmen und die Funktionsausführung entsprechend anzupassen.

So kann als ein Gütemaß beispielsweise die Anzahl der anderen Fahrzeuge 2 bestimmt und ausgegeben werden, deren Trajektorien als Grundlage für die Schätzung des Fahrspurverlaufs verwendet wurden. Die Anzahl der Trajektorien, die für eine jeweilige Fahrspur 3, 4, 5 berücksichtigt und im Wege der Bestimmung der durch Ausgleichsrechnung ermittelten Kurve zusammengefasst wurden, gibt eine Auskunft darüber, wie verlässlich die Schätzung des betreffenden Fahrspurverlaufs ist. So mag einer Schätzung eines Fahrspurverlaufs stärker vertraut werden, wenn die Schätzung auf Grundlage der Trajektorien mehrerer anderer Fahrzeuge 2 bestimmt wurde, als wenn die Schätzung auf Grundlage lediglich einer Trajektorie eines anderen Fahrzeuges 2 bestimmt wurde.

Als ein weiteres Gütemaß kann auch die Entfernung, auch als Vorausschau bezeichnet, bestimmt und ausgegeben werden, bis zu der die Schätzung des Fahrspurverlaufs gültig ist. Die Vorausschau kann beispielsweise bestimmt werden als die Entfernung des am weitesten entfernten Trajektorienpunktes eines anderen Fahrzeuges 2 unter allen anderen Fahrzeugen 2, deren Trajektorien als Grundlage für die Schätzung des Fahrspurverlaufs verwendet wurden. Die Vorausschau kann als Maß für eine Entfernung dienen, jenseits derer die Schätzung des Fahrspurverlaufs nicht oder nur eingeschränkt als gültig bewertet wird, oder mit einer mit zunehmender Entfernung sich verringernden Gültigkeit bewertet wird.

Es ist ebenfalls möglich, den sich bei der Ausführung der Ausgleichsrechnung ergebenden Residuumfehler pro Fahrspur als ein Gütemaß zu bestimmen und auszugeben. Der Residuumfehler gibt an, wie gut die Menge der Fahrzeugkoordinaten auf den Trajektorien einer Fahrspur zur berechneten Kurve für die Fahrspur passen. Der Residuumfehler wird gering sein, wenn die Trajektorien einer Fahrspur untereinander sehr konsistent sind, wenn also alle in der Fahrspur fahrenden Fahrzeuge sehr ähnlich gefahren sind. Der Residuumfehler wird hingegen um so höher sein, umso mehr die Trajektorien voneinander abweichen, obwohl sie zu ein und derselben Fahrspur zugeordnet wurden.

Als ein weiteres Gütemaß kann schließlich auch bestimmt und ausgegeben werden, ob die Schätzung für den Verlauf einer Fahrspur 3, 4, 5 erfolgt basierend auf Trajektorien, die der betreffenden Fahrspur 3, 4, 5 zugeordnet sind, oder ob die Schätzung für den Verlauf der Fahrspur 3, 4, 5 abgeleitet ist von der Schätzung für den Verlauf einer benachbarten Fahrspur 3, 4, 5.

Schließlich ist es ebenfalls möglich, die für die Schätzung eines Fahrspurverlaufs oder mehrerer Fahrspurverläufe relevanten Parameter und Bedingungen fest vorzugeben, oder einzelne, mehrere oder alle Parameter und Bedingungen abhängig beispielsweise von der Art der Fahrbahn 6, der Geschwindigkeit des Ego-Fahrzeugs 1 und/oder anderer Kriterien variabel auszuführen. So kann beispielsweise die Länge des Zeitfensters zur Erfassung und Akkumulation der Trajektorien und/oder die zeitliche Dichte der Abtastung von anderen Fahrzeugen 2 abhängig von der Geschwindigkeit des Ego-Fahrzeugs 1 gewählt und/oder abhängig von der Art der Fahrbahn 6 unterschiedlich gesetzt werden. So kann etwa im Fall einer Autobahn, verglichen beispielsweise mit einer innerstädtischen Straße, ein längeres Zeitfenster gewählt werden, um eine längere Vorausschau zu erlauben. Alternativ oder ergänzend kann beispielsweise das Zeitfenster auch verlängert werden, wenn sich das Ego-Fahrzeug 1 mit hoher Geschwindigkeit bewegt, und verkürzt werden, wenn sich das Ego-Fahrzeug 1 mit geringerer Geschwindigkeit bewegt, um auf diese Weise eine der Geschwindigkeit des Ego-Fahrzeugs 1 angepasste Vorausschau zu ermöglichen.

Für die zeitliche Dichte der Abtastung von Fahrzeugen 2 kann beispielsweise vorgesehen sein, auf einer innerstädtischen Straße und/oder bei geringerer Geschwindigkeit des Ego-Fahrzeugs 1 eine höhere zeitliche Dichte der Abtastung, und folglich eine höhere Abtastfrequenz zu wählen, und auf einer Autobahn und/oder bei höherer Geschwindigkeit des Ego-Fahrzeugs 1 eine geringere zeitliche Dichte der Abtastung, und folglich eine geringere Abtastfrequenz zu wählen

Es ist ebenso möglich, anstelle des Zeitfensters, oder in Ergänzung zu diesem, eine Entfernung hinter dem Ego-Fahrzeug 1 zu definieren, die eine Schwelle beziehungsweise Grenze beschreibt, bis zu der Trajektorien von anderen Fahrzeugen 2 erfasst und akkumuliert werden. So können beispielsweise alle Trajektorienpunkte, die weiter als die definierte Entfernung hinter dem Ego-Fahrzeug 1 liegen, gelöscht und nicht weiter zur Schätzung des Fahrspurverlaufs berücksichtigt werden.

Ebenso können die Erstreckungen der Fangbereiche 11, 12, 13 in Längs- und/oder Querrichtung abhängig von der Art der Fahrbahn 6, einer Verkehrssituation und/oder der Geschwindigkeit des Ego-Fahrzeugs 1 vergrößert oder verkleinert werden. Beispielsweise können im Fall einer Baustelle auf einer Autobahn mit entsprechend verengten Fahrspuren die Breiten der Fangbereiche 11, 12, 13 entsprechend angepasst werden.

Darüber hinaus kann es weiter möglich sein, je nach Art der Fahrbahn 6 und/oder der Lage der Fahrspur 4 des Ego-Fahrzeugs 1 einzelne Fangbereiche 11, 12, 13, insbesondere den linken und/oder den rechten Fangbereich 12, 13 zu aktivieren oder zu deaktivieren. Bewegt sich beispielsweise das Ego-Fahrzeug 1 auf einer mittleren Fahrspur 4 einer dreispurigen Fahrbahn 6, wie in den Beispielen der Fig. 4A bis 4C dargestellt, können sowohl der linke als auch der rechte Fangbereich 12, 13 aktiviert sein. Wenn sich das Ego-Fahrzeug 1 hingegen auf einer Fahrspur 3, 5 einer Fahrbahn 6 bewegt, die eine Fahrspur darstellt, neben der rechts oder links keine weitere Fahrspur existiert, kann der entsprechende rechte 13 oder linke 12 Fangereich deaktiviert werden. Ebenso ist es möglich, wenn sich das Ego-Fahrzeug 1 auf einer einspurigen Fahrbahn 6 bewegt, sowohl den rechten als auch den linken Fangbereich 13, 12 zu deaktivieren. Auf diese Weise kann verhindert werden, dass unerwünschte Erfassungen von anderen Fahrzeugen, wie etwa Randbebauungen, bei denen es sich nicht um am Verkehr teilnehmende, sich im Umfeld des Ego-Fahrzeugs 1 auf der Fahrbahn 6 in derselben Richtung bewegende andere Fahrzeuge handelt, zu einer unerwünschten Verfälschung der Schätzung des Fahrspurverlaufs führen.

Schließlich können auch die Filterkriterien und/oder Filterparameter zum Ausfiltern unerwünschter Trajektorien abhängig von der Geschwindigkeit des Ego-Fahrzeugs 1 und/oder der Art der Fahrbahn 6 geändert werden. Beispielsweise kann in einer Verkehrssituation mit einer Geschwindigkeitsbegrenzung vorgesehen sein, dass Trajektorien, die eine Bewegung mit einer Geschwindigkeit beschreiben, die mehr als eine vorgegebene feste oder variable Schwelle über der Geschwindigkeitsbegrenzung liegt, beispielsweise die Geschwindigkeitsbegrenzung um mehr als 30 km/h überschreitet, als nicht plausibel bewertet und daher ausgefiltert werden.

Die im Vorsehenden beschriebene Zuordnung von Trajektorien zu Fahrspuren 3, 4, 5 erlaubt darüber hinaus auch die Bestimmung weiterer Größen, die zur Ausführung von Fahrerassistenzfunktionen relevant oder dienlich sein können. So kann beispielsweise für jede Fahrspur 3, 4, 5 basierend auf den jeweils zugeordneten Trajektorien durchschnittliche Fahrgeschwindigkeiten je Fahrspur 3, 4, 5 bestimmt und ausgegeben werden.

**Patentansprüche**

1.  Verfahren (100) zum Schätzen eines Fahrspurverlaufs für ein Fahrzeug, als ein Ego-Fahrzeug, das sich auf einer Fahrbahn (6) mit mehreren Fahrspuren (3, 4, 5) bewegt, wobei wiederholt die Schritte ausgeführt werden:

    Erkennen (110) von einem oder mehreren anderen Fahrzeugen (2), die sich auf der Fahrbahn (6) in derselben Richtung bewegen wie das Ego-Fahrzeug (1);
    Erfassen (110) von Fahrzeugpositionen für jedes der erkannten anderen Fahrzeuge (2);
    Bilden (120) einer Trajektorie für jedes der erkannten anderen Fahrzeuge (2) basierend auf den jeweils erfassten Fahrzeugpositionen;
    Zuordnen (140) der Trajektorien zu möglichen Fahrspuren (3, 4, 5) basierend auf einem Verlauf der gebildeten Trajektorien in der Umgebung des Ego-Fahrzeugs (1);
    Auswählen (160) einer der möglichen Fahrspuren (3, 4, 5), der zumindest eine Trajektorie zugeordnet ist; und
    Schätzen (170) des Fahrspurverlaufs basierend auf der zumindest einen Trajektorie, die der ausgewählten Fahrspur (3, 4, 5) zugeordnet ist, **dadurch gekennzeichnet, dass** wenn erkannt wird, dass eine Trajektorie eines anderen Fahrzeugs (2), das einer Fahrspur (3, 4, 5) zugeordnet ist, in ihrem Verlauf zumindest eine Trajektorie eines weiteren anderen Fahrzeugs (2) kreuzt, die einer anderen Fahrspur (3, 4, 5) zugeordnet ist, die Trajektorie als ein Spurwechsel markiert wird.

2.  Verfahren (100) nach Anspruch 1, wobei zum Zuordnen (140) der Trajektorien zu möglichen Fahrspuren (3, 4, 5) basierend auf dem Verlauf der Trajektorien in der Umgebung des Ego-Fahrzeugs (1) ein Fangbereich (11) definiert ist für die mögliche Fahrspur (4) des Ego-Fahrzeugs (1), und wobei eine Trajektorie der möglichen Fahrspur (4) des Ego-Fahrzeugs (1) zugeordnet wird, wenn die Trajektorie zumindest einen Trajektorienpunkt aufweist, der in dem Fangbereich (11) für die mögliche Fahrspur (4) des Ego-Fahrzeugs (1) liegt.

3.  Verfahren (100) nach Anspruch 2, wobei weiter ein Fangbereich (13) definiert ist für eine mögliche Fahrspur (5) rechts des Ego-Fahrzeugs (1) und/oder ein Fangbereich (12) definiert ist für eine mögliche Fahrspur (3) links des Ego-Fahrzeugs (1), und wobei eine Trajektorie der möglichen Fahrspur links (3) beziehungsweise rechts (5) des Ego-Fahrzeugs (1) zugeordnet wird, wenn die Trajektorie zumindest einen Trajektorienpunkt aufweist, der in dem Fangbereich (13, 12) für die mögliche Fahrspur links (3) beziehungsweise rechts (5) des Ego-Fahrzeugs (1) liegt.

4.  Verfahren (100) nach einem der vorstehenden Ansprüche, wobei beim Auswählen (160) einer Fahrspur (3, 4, 5), der zumindest eine Trajektorie zugeordnet ist, überprüft wird, ob der Fahrspur (4) des Ego-Fahrzeugs (1) zumindest eine Trajektorie zugeordnet ist, und wenn ja, die Fahrspur (4) des Ego-Fahrzeugs (1) ausgewählt wird.

5.  Verfahren (100) nach Anspruch 4, wobei, wenn der Fahrspur (4) des Ego-Fahrzeugs (1) keine Trajektorie zugeordnet ist, überprüft wird, ob einer Fahrspur (3, 5) links oder rechts des Ego-Fahrzeugs (1) zumindest eine Trajektorie zugeordnet ist, und wenn ja, die betreffende Fahrspur (3, 5) ausgewählt wird.

6.  Verfahren (100) nach einem der vorstehenden Ansprüche, wobei zum Schätzen (170) des Fahrspurverlaufs eine Ausgleichsrechnung ausgeführt wird, um Parameter eines Polynoms zweiten Grades oder höher, oder einer Klothoide zu bestimmen, das beziehungsweise die durch die Menge der Trajektorienpunkte der zumindest einen Trajektorie gelegt wird, wobei die Ausgleichsrechnung vorzugsweise auf der Methode der kleinsten Quadrate basiert.

7.  Verfahren (100) nach einem der vorstehenden Ansprüche, ferner aufweisend das Berechnen und ausgeben zumindest eines Gütemaßes, wobei das zumindest eine Gütemaß aufweist:

    die Anzahl an betrachteten anderen Fahrzeugen (2) auf der ausgewählten Fahrspur (3, 4, 5) oder auf jeder der Fahrspuren (3, 4, 5);
    die Vorausschau für die ausgewählte Fahrspur (3, 4, 5) oder für jede der möglichen Fahrspuren (3, 4, 5); und/oder
    den bei Ausführen der Ausgleichsrechnung ergebenden Residuumfehler.

8.  Verfahren (100) nach einem der vorstehenden Ansprüche, ferner aufweisend einen Schritt des Plausibilisierens und/oder Filterns (130) von Trajektorien.

9.  Fahrerassistenzverfahren zum Unterstützen eines Fahrers beim Führen eines Fahrzeuges, als ein Ego-Fahrzeug (1), aufweisend die Schritte:

    Schätzen eines Verlaufs der Fahrspur (4) des Ego-Fahrzeugs (1) durch Ausführen des Verfahrens (100) nach einem der Ansprüche 1 bis 8;
    Erkennen des Verlaufs der Fahrspur (4) des Ego-Fahrzeugs (1) mittels eines kamerabasierten und/oder LIDAR basierten Fahrspurerkennungssystems; und
    Ausführen zumindest einer Fahrerassistenzfunktion basierend auf dem geschätzten Fahrspurverlauf und dem erkannten Fahrspurverlauf, wobei die Information über den erkannten Fahrspurverlauf plausibilisiert wird mittels der Information über den geschätzten Fahrspurverlauf, wobei, wenn die Information über den erkannten Fahrspurverlauf als nicht plausibel bewertet wird, die Fahrerassistenzfunktion ausgeführt wird basierend allein auf Basis der Information über den geschätzten Fahrspurverlauf, und/oder die Information über den geschätzten Fahrspurverlauf plausibilisiert wird mittels der Information über den erkannten Fahrspurverlauf, wobei, wenn die Information über den geschätzten Fahrspurverlauf als nicht plausibel bewertet wird, die Fahrerassistenzfunktion ausgeführt wird basierend allein auf Basis der Information über den erkannten Fahrspurverlauf

10. Fahrerassistenzverfahren nach Anspruch 9, ferner aufweisend Fusionieren der Information über den geschätzten Fahrspurverlauf und der Information über den erkannten Fahrspurverlauf, um Information eines fusionierten Fahrspurverlaufs zu erhalten, wobei die Fahrerassistenzfunktion basierend auf der Information über den fusionierten Fahrspurverlauf ausgeführt wird.

11. System (50) zum Schätzen eines Fahrspurverlaufs für ein Fahrzeug, als ein Ego-Fahrzeug (1), bei einer Bewegung auf einer Fahrbahn (6) mit mehreren Fahrspuren (3, 4, 5), aufweisend:

   Objekterkennungsmittel, die eingerichtet sind, ein oder mehrere andere Fahrzeuge (2) zu erkennen, die sich auf der Fahrbahn (6) in der selben Richtung bewegen wie das Ego-Fahrzeug (1);
   Fahrzeugpositionserfassungsmittel, die eingerichtet sind, Fahrzeugpositionen für jedes der erkannten anderen Fahrzeuge (2) zu erfassen;
   Trajektorienbildungsmittel, die eingerichtet sind, für jedes der erkannten anderen Fahrzeuge (2) eine Trajektorie zu bilden;
   Trajektorienzuordnungsmittel, die eingerichtet sind, die gebildeten Trajektorien möglichen Fahrspuren (3, 4, 5) zuzuordnen basierend auf einem Verlauf der Trajektorien in der Umgebung des Ego-Fahrzeugs (1);
   Auswahlmittel, die eingerichtet sind, aus der Mehrzahl möglicher Fahrpuren (3, 4, 5) eine Fahrspur (3, 4, 5) auszuwählen, der zumindest eine Trajektorie zugeordnet ist; und
   Fahrspurverlaufsschätzmittel, die eingerichtet sind, den Fahrspurverlauf zu schätzen basierend auf der zumindest einen Trajektorie, die der ausgewählten Fahrspur (3, 4, 5) zugeordnet ist,

**dadurch gekennzeichnet, dass**
das System (50) dazu eingerichtet ist, wenn es erkennt, dass eine Trajektorie eines anderen Fahrzeugs (2), das einer Fahrspur (3, 4, 5) zugeordnet ist, in ihrem Verlauf zumindest eine Trajektorie eines weiteren anderen Fahrzeugs (2) kreuzt, die einer anderen Fahrspur (3, 4, 5) zugeordnet ist, die Trajektorie als einen Spurwechsel zu markieren.

12. System (50) nach Anspruch 11,

   wobei zum Zuordnen (140) der Trajektorien zu möglichen Fahrspuren (3, 4, 5) basierend auf dem Verlauf der Trajektorien in der Umgebung des Ego-Fahrzeugs (1) ein Fangbereich (11) definiert ist für die mögliche Fahrspur (4) des Ego-Fahrzeugs (1), und bevorzugt weiter ein Fangbereich (13) definiert ist für eine mögliche Fahrspur (5) rechts des Ego-Fahrzeugs (1) und/oder ein Fangbereich (12) definiert ist für eine mögliche Fahrspur (3) links des Ego-Fahrzeugs (1);
   wobei die Trajektorienzuordnungsmittel eingerichtet sind, eine Trajektorie der möglichen Fahrspur (4) des Ego-Fahrzeugs (1) zuzuordnen, wenn die Trajektorie zumindest einen Trajektorienpunkt aufweist, der in dem Fangbereich (11) für die mögliche Fahrspur (4) des Ego-Fahrzeugs (1) liegt, und bevorzugt weiter eingerichtet sind, eine Trajektorie der möglichen Fahrspur links (3) beziehungsweise rechts (5) des Ego-Fahrzeugs (1) zuzuordnen, wenn die Trajektorie zumindest einen Trajektorienpunkt aufweist, der in dem Fangbereich (13, 12) für die mögliche Fahrspur links (3) beziehungsweise rechts (5) des Ego-Fahrzeugs (1) liegt; und
   wobei die Trajektorienzuordnungsmittel eingerichtet sind, zum Auswählen (160) einer Fahrspur (3, 4, 5), der zumindest eine Trajektorie zugeordnet ist, zu überprüfen, ob der Fahrspur (4) des Ego-Fahrzeugs (1) zumindest eine Trajektorie zugeordnet ist, und wenn ja, die Fahrspur (4) des Ego-Fahrzeugs (1) auszuwählen, und bevorzugt weiter eingerichtet sind, wenn der Fahrspur (4) des Ego-Fahrzeugs (1) keine Trajektorie zugeordnet ist, zu überprüfen, ob einer Fahrspur (3, 5) links oder rechts des Ego-Fahrzeugs (1) zumindest eine Trajektorie zugeordnet ist, und wenn ja, die betreffende Fahrspur (3, 5) auszuwählen.

13. System (50) nach einem der Ansprüche 11 oder 12, wobei das System (50) eingerichtet ist, das Verfahren (100) nach einem der Ansprüche 1 bis 13 auszuführen.

14. Fahrzeug (1), aufweisend ein System (50) nach einem der Ansprüche 11 bis 13.

**Claims**

1. Method (100) for estimating a course of a traffic lane for a vehicle as an ego-vehicle which is travelling on a road (6) with multiple traffic lanes (3, 4, 5), wherein the following steps are repeatedly carried out:

   detecting (110) one or more other vehicles (2) moving on the road (6) in the same direction as the ego-vehicle (1);
   determining (110) vehicle positions for each of the other vehicles (2) detected;
   forming (120) a trajectory for each of the other vehicles (2) detected, based on the respectively determined vehicle positions;
   assigning (140) the trajectories to possible traffic lanes (3, 4, 5), based on a course of the trajectories formed in the environment of the ego-vehicle (1);
   selecting (160) one of the possible traffic lanes (3, 4, 5) to which at least one trajectory is assigned;
   and
   estimating (170) the course of the traffic lane, based on the at least one trajectory assigned to the selected traffic lane (3, 4, 5),
   **characterized in that**
   if it is detected that a trajectory of another vehicle (2) assigned to a traffic lane (3, 4, 5) crosses in its course at least one trajectory of a further other vehicle (2) assigned to another traffic lane (3, 4, 5), the trajectory is marked as a lane change.

2. Method (100) according to Claim 1, wherein, for assigning (140) the trajectories to possible traffic lanes (3, 4, 5), based on the course of the trajectories in the environment of the ego-vehicle (1), a capturing region (11) is defined for the possible traffic lane (4) of the ego-vehicle (1), and wherein a trajectory is assigned to the possible traffic lane (4) of the ego-vehicle (1) if the trajectory comprises at least one trajectory point that lies in the capturing region (11) for the possible traffic lane (4) of the ego-vehicle (1).

3. Method (100) according to Claim 2, wherein furthermore a capturing region (13) is defined for a possible traffic lane (5) to the right of the ego-vehicle (1) and/or a capturing region (12) is defined for a possible traffic lane (3) to the left of the ego-vehicle (1), and wherein a trajectory is assigned to the possible traffic lane to the left (3) and to the right (5) of the ego-vehicle (1) respectively if the trajectory comprises at least one trajectory point that lies in the capturing region (13, 12) for the possible traffic lane to the left (3) and to the right (5) of the ego-vehicle (1) respectively.

4. Method (100) according to one of the preceding claims, wherein, when selecting (160) a traffic lane (3, 4, 5) to which at least one trajectory is assigned, it is checked whether the traffic lane (4) of the ego-vehicle (1) is assigned at least one trajectory, and if so the traffic lane (4) of the ego-vehicle (1) is selected.

5. Method (100) according to Claim 4, wherein, if the traffic lane (4) of the ego-vehicle (1) is not assigned a trajectory, it is checked whether a traffic lane (3, 5) to the left or to the right of the ego-vehicle (1) is assigned at least one trajectory, and if so the relevant traffic lane (3, 5) is selected.

6. Method (100) according to one of the preceding claims, wherein, for estimating (170) the course of the traffic lane, a calculus of observations is carried out, in order to determine parameters of a polynomial of the second degree or higher or a clothoid placed through the set of trajectory points of the at least one trajectory, wherein the calculus of observations is preferably based on the method of least squares.

7. Method (100) according to one of the preceding claims, also comprising calculating and outputting at least one quality measure, wherein the at least one quality measure comprises:

   the number of other vehicles (2) that are being considered in the selected traffic lane (3, 4, 5) or in each of the traffic lanes (3, 4, 5);
   the forecast for the selected traffic lane (3, 4, 5) or for each of the possible traffic lanes (3, 4, 5); and/or
   the residual error occurring when carrying out the calculus of observations.

8. Method (100) according to one of the preceding claims, also comprising a step of checking the plausibility of and/or filtering (130) trajectories.

9. Driver assistance method for assisting a driver when driving a vehicle, as an ego-vehicle (1), comprising the following steps:

   estimating a course of the traffic lane (4) of the ego-vehicle (1) by carrying out the method (100) according to one of Claims 1 to 8;
   detecting the course of the traffic lane (4) of the ego-vehicle (1) by means of a camera-based and/or LIDAR-based traffic-lane detection system; and
   carrying out at least one driver assistance function, based on the estimated course of the traffic lane and the detected course of the traffic lane, wherein the information concerning the detected course of the traffic lane is checked for plausibility by means of the information concerning the estimated course of the traffic lane, wherein, if the information concerning the detected course of the traffic lane is not deemed to be plausible, the driver assistance function is carried out by being based solely on the basis of the information concerning the estimated course of the traffic lane, and/or

the information concerning the estimated course of the traffic lane is checked for plausibility by means of the information concerning the detected course of the traffic lane, wherein, if the information concerning the estimated course of the traffic lane is not deemed to be plausible, the driver assistance function is carried out by being based solely on the basis of the information concerning the detected course of the traffic lane.

10. Driver assistance method according to Claim 9, also comprising
fusing the information concerning the estimated course of the traffic lane and the information concerning the detected course of the traffic lane in order to obtain information of a fused course of the traffic lane, wherein the driver assistance function is carried out on the basis of the information concerning the fused course of the traffic lane.

11. System (50) for estimating a course of a traffic lane for a vehicle, as an ego-vehicle (1), when travelling on a road (6) with multiple traffic lanes (3, 4, 5), comprising:

object detecting means, which are designed to detect one or more other vehicles (2) moving on the road (6) in the same direction as the ego-vehicle (1);
vehicle-position determining means, which are designed to determine vehicle positions for each of the other vehicles (2) detected;
trajectory forming means, which are designed to form a trajectory for each of the other vehicles (2) detected;
trajectory assigning means, which are designed to assign the trajectories formed to possible traffic lanes (3, 4, 5), based on a course of the trajectories in the environment of the ego-vehicle (1);
selecting means, which are designed to select from the plurality of possible traffic lanes (3, 4, 5) a traffic lane (3, 4, 5) to which at least one trajectory is assigned; and
traffic-lane course estimating means, which are designed to estimate the course of the traffic lane, based on the at least one trajectory assigned to the selected traffic lane (3, 4, 5), **characterized in that**
the system (50) is designed so as, if it is detected that a trajectory of another vehicle (2) assigned to a traffic lane (3, 4, 5) crosses in its course at least one trajectory of a further other vehicle (2) assigned to another traffic lane (3, 4, 5), to mark the trajectory as a lane change.

12. System (50) according to Claim 11,

wherein, for assigning (140) the trajectories to possible traffic lanes (3, 4, 5), based on the course of the trajectories in the environment of the ego-vehicle (1), a capturing region (11) is defined for the possible traffic lane (4) of the ego-vehicle (1), and preferably furthermore a capturing region (13) is defined for a possible traffic lane (5) to the right of the ego-vehicle (1) and/or a capturing region (12) is defined for a possible traffic lane (3) to the left of the ego-vehicle (1), wherein the trajectory assigning means are designed to assign a trajectory to the possible traffic lane (4) of the ego-vehicle (1) if the trajectory comprises at least one trajectory point that lies in the capturing region (11) for the possible traffic lane (4) of the ego-vehicle (1), and preferably furthermore are designed to assign a trajectory to the possible traffic lane to the left (3) and to the right (5) of the ego-vehicle (1) respectively if the trajectory comprises at least one trajectory point that lies in the capturing region (13, 12) for the possible traffic lane to the left (3) and to the right (5) of the ego-vehicle (1) respectively; and wherein the trajectory assigning means are designed so as, for selecting (160) a traffic lane (3, 4, 5) to which at least one trajectory is assigned, to check whether the traffic lane (4) of the ego-vehicle (1) is assigned at least one trajectory, and if so to select the traffic lane (4) of the ego-vehicle (1), and preferably furthermore are designed so as, if the traffic lane (4) of the ego-vehicle (1) is not assigned a trajectory, to check whether a traffic lane (3, 5) to the left or to the right of the ego-vehicle (1) is assigned at least one trajectory, and if so to select the relevant traffic lane (3, 5).

13. System (50) according to either of Claims 11 and 12, wherein the system (50) is designed to carry out the method (100) according to one of Claims 1 to 13.

14. Vehicle (1), comprising a system (50) according to one of Claims 11 to 13.

**Revendications**

1. Procédé (100) pour estimer le tracé d'une voie de circulation pour un véhicule, sous la forme d'un véhicule autonome et connecté, qui se déplace sur une chaussée (6) comprenant plusieurs voies de circulation (3, 4, 5), les étapes suivantes étant exécutées de manière répétitive :

reconnaissance (110) d'un ou plusieurs autres véhicules (2) qui se déplacent sur la chaussée (6) dans la même direction que le véhicule autonome et connecté (1) ;

détection (110) de positions de véhicule pour chacun des autres véhicules (2) reconnus ;

formation (120) d'une trajectoire pour chacun des autres véhicules (2) reconnus en se basant sur les positions de véhicule respectivement détectées ;

association (140) des trajectoires à des voies de circulation (3, 4, 5) possibles en se basant sur un tracé des trajectoires dans l'environnement du véhicule autonome et connecté (1) ;

sélection (160) de l'une des voies de circulation (3, 4, 5) possibles qui est associée à au moins une trajectoire ; et

estimation (170) du tracé de la voie de circulation en se basant sur l'au moins une trajectoire qui est associée à la voie de circulation (3, 4, 5) sélectionnée, **caractérisé en ce que**

lorsqu'il est reconnu qu'une trajectoire d'un autre véhicule (2) auquel est associé une voie de circulation (3, 4, 5) croise avec son tracé au moins une trajectoire d'un autre véhicule (2) supplémentaire auquel est associée une autre voie de circulation (3, 4, 5), la trajectoire est marquée comme un changement de voie.

2. Procédé (100) selon la revendication 1, en vue de l'association (140) des trajectoires à des voies de circulation (3, 4, 5) possibles en se basant sur le tracé des trajectoires dans l'environnement du véhicule autonome et connecté (1), une zone de capture (11) étant définie pour la voie de circulation (4) possible du véhicule autonome et connecté (1), et une trajectoire étant associée à la voie de circulation (4) possible du véhicule autonome et connecté (1) lorsque la trajectoire présente au moins un point de trajectoire qui se trouve dans la zone de capture (11) pour la voie de circulation (4) possible du véhicule autonome et connecté (1).

3. Procédé (100) selon la revendication 2, une zone de capture (13) étant en plus définie pour une voie de circulation (5) possible à droite du véhicule autonome et connecté (1) et/ou une zone de capture (12) étant définie pour une voie de circulation (3) possible à gauche du véhicule autonome et connecté (1), et une trajectoire étant associée à la voie de circulation possible à gauche (3) ou à droite (5) du véhicule autonome et connecté (1) lorsque la trajectoire présente au moins un point de trajectoire qui se trouve dans la zone de capture (13, 12) pour la voie de circulation gauche (3) ou droite (5) possible du véhicule autonome et connecté (1) .

4. Procédé (100) selon l'une des revendications précédentes, un contrôle étant effectué lors de la sélection (160) d'une voie de circulation (3, 4, 5) qui est associée à au moins une trajectoire afin de vérifier si au moins une trajectoire est associée à la voie de circulation (4) du véhicule autonome et connecté (1) et, dans l'affirmative, la voie de circulation (4) du véhicule autonome et connecté (1) est sélectionnée.

5. Procédé (100) selon la revendication 4, un contrôle étant effectué lorsqu'aucune trajectoire n'est associée à la voie de circulation (4) du véhicule autonome et connecté (1) afin de vérifier si au moins une trajectoire est associée à une voie de circulation (3, 5) à gauche ou à droite du véhicule autonome et connecté (1) et, dans l'affirmative, la voie de circulation (3, 5) concernée est sélectionnée.

6. Procédé (100) selon l'une des revendications précédentes, un calcul de compensation étant effectué pour l'estimation (170) du tracé de la voie de circulation afin de déterminer des paramètres d'un polynôme du deuxième degré ou plus, ou d'une clothoïde, qui est défini(e) par l'ensemble des points de trajectoire de l'au moins une trajectoire, le calcul de compensation se basant de préférence sur la méthode des moindres carrés.

7. Procédé (100) selon l'une des revendications précédentes, comprenant en outre le calcul et la délivrance d'au moins un indice de qualité, l'au moins un indice de qualité comprenant :

le nombre d'autres véhicules (2) considérés sur la voie de circulation (3, 4, 5) sélectionnée ou sur chacune des voies de circulation (3, 4, 5) ;

la prévision pour la voie de circulation (3, 4, 5) sélectionnée ou pour chacune des voies de circulation (3, 4, 5) ; et/ou

l'erreur résiduelle se produisant lors de l'exécution du calcul de compensation.

8. Procédé (100) selon l'une des revendications précédentes, comprenant en outre une étape de vérification de la plausibilité et/ou de filtrage (130) des trajectoires.

9. Procédé d'assistance au conducteur destiné à assister un conducteur lors de la conduite d'un véhicule, sous la forme d'un véhicule autonome et connecté (1), comprenant les étapes suivantes :

estimation d'un tracé de la voie de circulation (4) du véhicule autonome et connecté (1) en mettant en œuvre le procédé (100) selon l'une des revendications 1 à 8 ;
reconnaissance du tracé de la voie de circulation (4) du véhicule autonome et connecté (1) au moyen d'un système de reconnaissance de voie de circulation à base de caméra et/ou à base de LIDAR ; et
exécution d'au moins une fonction d'assistance au conducteur en se basant sur le tracé estimé de la voie de circulation et le tracé reconnu de la voie de circulation, la plausibilité des informations à propos du tracé reconnu de la voie de circulation étant vérifiée au moyen des informations à propos du tracé estimé de la voie de circulation, la fonction d'assistance au conducteur, lorsque les informations à propos du tracé reconnu de la voie de circulation sont évaluées non plausibles, étant exécutée uniquement sur la base des informations à propos du tracé estimé de la voie de circulation, et/ou
la plausibilité des informations à propos du tracé estimé de la voie de circulation étant vérifiée au moyen des informations à propos du tracé reconnu de la voie de circulation, la fonction d'assistance au conducteur, lorsque les informations à propos du tracé estimé de la voie de circulation sont évaluées non plausibles, étant exécutée uniquement sur la base des informations à propos du tracé reconnu de la voie de circulation.

10. Procédé d'assistance au conducteur selon la revendication 9, comprenant en outre la fusion des informations à propos du tracé estimé de la voie de circulation et des informations à propos du tracé reconnu de la voie de circulation afin d'obtenir des informations d'un tracé de voie de circulation fusionné, la fonction d'assistance au conducteur étant exécutée sur la base des informations à propos du tracé de voie de circulation fusionné.

11. Système (50) pour estimer le tracé d'une voie de circulation pour un véhicule, sous la forme d'un véhicule autonome et connecté (1), lors d'un déplacement sur une chaussée (6) comprenant plusieurs voies de circulation (3, 4, 5), comprenant :

des moyens de reconnaissance d'objet, qui sont conçus pour reconnaître un ou plusieurs autres véhicules (2) qui se déplacent sur la chaussée (6) dans la même direction que le véhicule autonome et connecté (1) ;
de moyens de détection de position de véhicule, qui sont conçus pour détecter les positions de véhicule pour chacun des autres véhicules (2) reconnus ;
des moyens de formation de trajectoire, qui sont conçus pour former une trajectoire pour chacun des autres véhicules (2) reconnus ;

des moyens d'association de trajectoire, qui sont conçus pour associer les trajectoires formées à des voies de circulation (3, 4, 5) possibles en se basant sur un tracé des trajectoires dans l'environnement du véhicule autonome et connecté (1) ;
des moyens de sélection, qui sont conçus pour sélectionner, parmi la pluralité de voies de circulation (3, 4, 5) possibles, une voie de circulation (3, 4, 5) qui est associée à au moins une trajectoire ; et
des moyens d'estimation de tracé de voie de circulation, qui sont conçus pour estimer le tracé de la voie de circulation en se basant sur l'au moins une trajectoire qui est associée à la voie de circulation (3, 4, 5) sélectionnée,
**caractérisé en ce que**
le système (50) est conçu pour, lorsqu'il reconnaît qu'une trajectoire d'un autre véhicule (2) auquel est associé une voie de circulation (3, 4, 5) croise avec son tracé au moins une trajectoire d'un autre véhicule (2) supplémentaire auquel est associée une autre voie de circulation (3, 4, 5), marquer la trajectoire comme un changement de voie.

12. Système (50) selon la revendication 11,

en vue de l'association (140) des trajectoires à des voies de circulation (3, 4, 5) possibles en se basant sur le tracé des trajectoires dans l'environnement du véhicule autonome et connecté (1), une zone de capture (11) étant définie pour la voie de circulation (4) possible du véhicule autonome et connecté (1), et de préférence en plus une zone de capture (13) étant définie pour une voie de circulation (5) possible à droite du véhicule autonome et connecté (1) et/ou une zone de capture (12) étant définie pour une voie de circulation (3) possible à gauche du véhicule autonome et connecté (1) ;
les moyens d'association de trajectoire étant conçus pour associer une trajectoire à la voie de circulation (4) possible du véhicule autonome et connecté (1) lorsque la trajectoire présente au moins un point de trajectoire qui se trouve dans la zone de capture (11) pour la voie de circulation (4) possible du véhicule autonome et connecté (1), et étant de préférence en plus conçus pour associer une trajectoire à la voie de circulation possible à gauche (3) ou à droite (5) du véhicule autonome et connecté (1) lorsque la trajectoire présente au moins un point de trajectoire qui se trouve dans la zone de capture (13, 12) pour la voie de circulation gauche (3) ou droite (5) possible du véhicule autonome et connecté (1) ; et les moyens d'association de trajectoire étant conçus pour, en vue de sélectionner (160) une voie de circulation (3, 4, 5) qui est associée à moins une trajectoire, vérifier si au moins une trajectoire est associée à la voie de circulation (4) du véhicule autonome et connecté (1) et, dans l'affirmative, sélectionner la voie de circulation (4) du véhicule autonome et connecté (1), et de préférence étant en plus conçus pour, lorsqu'aucune trajectoire n'est associée à la voie de circulation (4) du véhicule autonome et connecté (1), vérifier si au moins une trajectoire est associée à une voie de circulation (3, 5) à gauche ou à droite du véhicule autonome et connecté (1) et, dans l'affirmative, sélectionner la voie de circulation (3, 5) concernée.

13. Système (50) selon l'une des revendications 11 ou 12, le système (50) étant conçu pour mettre en œuvre le procédé (100) selon l'une des revendications 1 à 13.

14. Véhicule (1), possédant un système (50) selon l'une des revendications 11 à 13.

**Fig. 1**

**Fig. 5**

100

```
┌─────────────────────────┐
│   Erkennen Objekte und   │────── 110
│ Erfassen Objektkoordinaten│
└─────────────────────────┘
            │
            ▼
┌─────────────────────────┐
│   Bilden von Trajektorien für │────── 120
│      erkannte Objekte    │
└─────────────────────────┘
            │
            ▼
┌─────────────────────────┐
│  Plausibilisieren und Filtern │────── 130
│       Trajektorien       │
└─────────────────────────┘
            │
            ▼
┌─────────────────────────┐
│  Zuordnen von Trajektorien zu │────── 140
│        Fahrspuren        │
└─────────────────────────┘
            │
            ▼
┌─────────────────────────┐
│  Erkennen von Spurwechslern  │────── 150
└─────────────────────────┘
            │
            ▼
┌─────────────────────────┐
│   Auswählen einer Fahrspur   │────── 160
└─────────────────────────┘
            │
            ▼
┌─────────────────────────┐
│   Schätzung Fahrspurverlauf  │────── 170
└─────────────────────────┘
            │
            ▼
┌─────────────────────────┐
│   Ausgeben geschätzte    │────── 180
│     Fahrspurparameter    │
└─────────────────────────┘
```

**Fig. 2**

6

Lokales
Koordinatensystem
3

4

5

Zeitpunkt i

**Fig. 3A**

6

Fahrzeugbewegung        Trajektorienpunkt i        3

4

5

Zeitpunkt i+1

**Fig. 3B**

6

Fahrzeugbewegung        Trajektorienpunkte i, i+1        3

4

5

Zeitpunkt i+2

**Fig. 3C**

Fig. 4A

Fig. 4B

Fig. 4C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1074430 A1
- WO 05088344 A
- DE 102004028404
- WO 2005039957 A
- EP 1829760 A
- DE 102005002504
- US 2002049539 A
- DE 102007021762 A1
- DE 102005029662 A1
- DE 102005039103 A1
- DE 102006037993 A1